# EUROPEAN PATENT SPECIFICATION

(11) **EP 3 889 864 B1**
(45) Date of publication and mention of the grant of the patent: **08.10.2025**
(21) Application number: 18941570.6
(22) Date of filing: 27.11.2018
(51) Int. Cl.: G06Q 20/18, G07D 11/235, G07D 11/26

(54) **CAUSE ESTIMATION DEVICE, CAUSE ESTIMATION OUTPUT METHOD, AND PAPER SHEET HANDLING DEVICE**
VORRICHTUNG ZUR URSACHENSCHÄTZUNG, VERFAHREN ZUR URSACHENSCHÄTZUNGSAUSGABE UND VORRICHTUNG ZUR HANDHABUNG EINES PAPIERBLATTS
DISPOSITIF D'ESTIMATION DE CAUSE, PROCÉDÉ DE SORTIE D'ESTIMATION DE CAUSE, ET DISPOSITIF DE MANIPULATION DE FEUILLE DE PAPIER

(43) Date of publication of application: 06.10.2021
(73) Proprietor: Fujitsu Frontech Limited, Inagi-shi, Tokyo 206-8555 (JP); Fujitsu Frontech Systems Limited, Maebashi-shi, Gunma 371-0024 (JP)
(72) Inventor: ANDO, Atsushi, Inagi-shi, Tokyo 206-8555 (JP); TAMAHASHI, Tomoyuki, Inagi-shi, Tokyo 206-8555 (JP); MIYAZAKI, Hiroshi, Inagi-shi, Tokyo 206-8555 (JP); MARUYAMA, Akio, Inagi-shi, Tokyo 206-8555 (JP); OGAWA, Tomoaki, Inagi-shi, Tokyo 206-8555 (JP); MINAMISHIN, Hayato, Inagi-shi, Tokyo 206-8555 (JP)
(74) Representative: Haseltine Lake Kempner LLP
(86) International application number: PCT/JP2018/043640
(87) International publication number: WO 2020/110208

(56) References cited:
- EP-A1- 1 672 595
- EP-A2- 1 672 500
- JP-A- 2017 216 757
- JP-A- 2018 147 080
- JP-A- H05 266 299
- JP-A- H05 266 299
- JP-A- H10 275 276
- JP-B2- S 648 063
- US-A1- 2013 208 295

## Description

### Field

The present invention relates to a paper sheet handling system and method.

### Background

A paper sheet handling device includes, for example, an input/output unit for inputting/outputting paper sheets such as banknotes, and a storage section for storing the paper sheets. In the paper sheet handling device, paper sheets inserted into the input/output unit are conveyed to the storage section through a conveyance path, to be stored. Furthermore, in the paper sheet handling device, the paper sheets stored in the storage section are fed out and conveyed through the conveyance path to be output from the input/output unit.

### Citation List

### Patent Literature

Patent Literature 1: JP 2007-323198 A
Patent Literature 2: JP 2016-152011 A
Patent Literature 3: JP 2010-86219 A
Patent Literature 4: JP 2006-92141 A

EP1672595A1 discloses a method for determining the cause of an error state for one or more components within an apparatus. The apparatus comprises a plurality of sensors arranged to monitor the operation of components of the apparatus and a control means arranged to receive said information from said plurality of sensors. The method comprises analysing said sensor information in the form of an error log to ascertain sensor patterns from said sensor information comparing said sensor patterns with detectors, which are predefined patterns, indicative of the condition of said one or more components within the apparatus and classifying said sensor patterns as being indicative of said error state of a component or not based upon a comparison of sensor patterns with said detectors.

EP1672500A2 discloses a method of predicting the probable future condition of one or more components within an apparatus comprising a plurality of sensors arranged to monitor the operation of components of the apparatus and a control means arranged to receive said information from said plurality of sensors. The method comprises receiving said sensor information; analysing the information to ascertain sensor patterns from said sensor information; comparing said sensor patterns with detectors, which are predefined patterns, indicative of the future condition of said one or more components within the apparatus; and classifying said sensor patterns as being indicative of future failure of a component or not based upon a comparison of sensor patterns with said detectors.

US2013208295A1 discloses a method for predicting failure in an Automated Teller Machine (ATM). The method may include using a database to store information relating to the performance of a component function by an ATM component. The information may include normal performance information and fault information. The method may further include using a computational module to calculate a fault rate for the ATM component. The method may also include using a processor to compare the calculated fault rate to a threshold value associated with the component function. In the event that the fault rate exceeds the threshold value, the processor may initiate a request for service of the ATM component.

JPH05266299A discloses an automatic teller machine in which plural housing safes capable of housing a large volume of cash are mounted on a safe mounting part provided on a device main body side cabinet loadably/ unloadably, and which performs a transaction according to the input/output of the cash by housing by fetching the cash in the mounted housing safes or delivering housed cash, housing safe managing memory in which transaction information relating to an executed input/output transaction is housed, and a connection means which makes the housing safe managing memory access a device main body side are provided at the housing safes. Also, a transaction information control means is provided which makes access the housing safe managing memory of the housing safes via the connection means when the housing safes are mounted on the safe mounting part, and controls the collection and the addition/update of the information.

### Summary

### Technical Problem

For example, when an error such as jamming of a banknote on the conveyance path occurs in the paper sheet handling device, a user contacts a maintenance company in charge of maintenance of the paper sheet handling device, and then a worker is dispatched from the maintenance company to a location of the paper sheet handling device to perform recovery work, for example. Unfortunately, the recovery work may take some time because identification of a cause of the error by the worker highly depends on the skill of the worker. Such a long time for the recovery work results in a compromised service of the paper sheet handling device.

### Solution to Problem

The present invention is defined by the appended independent claims, to which reference should now be made. Specific embodiments are defined in the dependent claims. Advantageous Effects of Invention

According to one aspect, the service of the paper sheet handling device can be prevented from being compromised.

### Brief Description of Drawings

FIG. 1 is an explanatory diagram illustrating an example of an ATM maintenance system according to an embodiment.
FIG. 2 is an explanatory diagram illustrating an example of a hardware configuration of a cause estimation device.
FIG. 3 is a block diagram illustrating an example of a functional configuration of the cause estimation device.
FIG. 4 is an explanatory diagram illustrating an example of an ATM.
FIG. 5 is an explanatory diagram illustrating an example of a unit configuration of the ATM.
FIG. 6 is an explanatory diagram illustrating an example of an operation performed by the ATM when banknotes are deposited.
FIG. 7 is an explanatory diagram illustrating an example of an operation performed by the ATM when a deposited banknote is returned.
FIG. 8 is an explanatory diagram illustrating an example of an operation performed by the ATM when a deposited banknote is stored.
FIG. 9 is an explanatory diagram illustrating an example of an operation performed by the ATM when banknotes are withdrawn.
FIG. 10 is an explanatory diagram illustrating an example of an operation performed by the ATM when banknotes are withdrawn.
FIG. 11 is a flowchart illustrating an example of a processing operation, related to error symptom recovery processing, performed by the cause estimation device and a management device.
FIG. 12 is a flowchart illustrating an example of a processing operation, related to skew avoidance processing, performed by the cause estimation device and the management device.
FIG. 13 is a flowchart illustrating an example of a processing operation, related to double dispensing avoidance processing, performed by the cause estimation device and the management device.
FIG. 14 is a flowchart illustrating an example of a processing operation, related to jam recovery processing, performed by the cause estimation device and the management device.
FIG. 15 is a flowchart illustrating an example of a processing operation, related to pickup error check processing, performed by the cause estimation device and the management device.

### Description of Embodiments

Embodiments of a cause estimation device and the like disclosed in the present application will be described in detail with reference to the drawings. The disclosed technology is not limited by the embodiments. The embodiments described below may be appropriately combined as long as there is no contradiction.

### [First Embodiment]

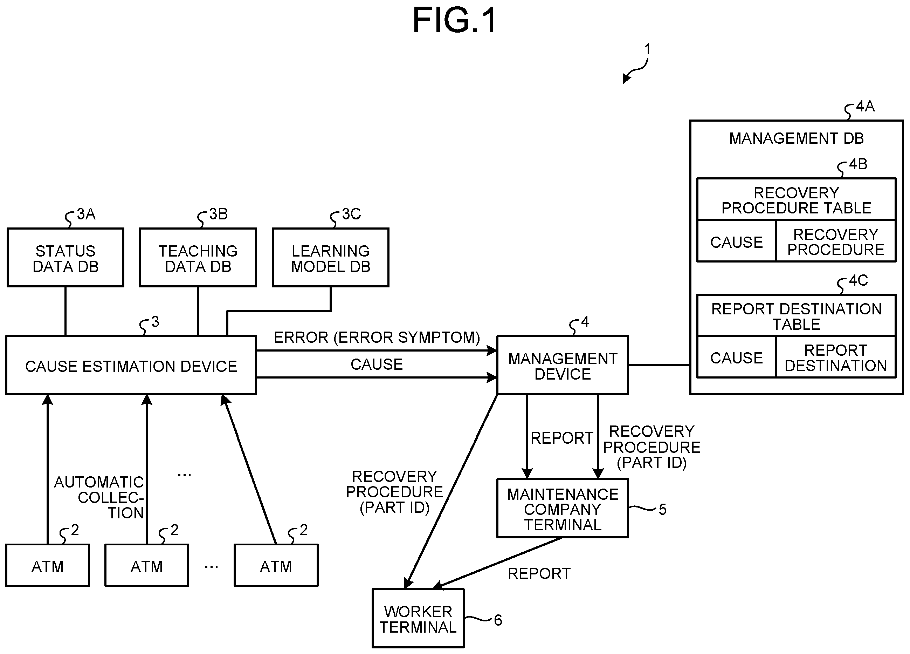

FIG. 1 is an explanatory diagram illustrating an example of an automatic teller machine (ATM) maintenance system 1 according to an embodiment. The ATM maintenance system 1 illustrated in FIG. 1 includes a plurality of the ATMs 2, a cause estimation device 3, a management device 4, a maintenance company terminal 5, and a worker terminal 6. Each of the ATMs 2 is, for example, a paper sheet handling device to and from which banknotes are deposited and withdrawn. The cause estimation device 3 is an information processing device that estimates and outputs the cause corresponding to an error or an error symptom of the ATM 2. The management device 4 manages a recovery procedure for recovering from an error or an error symptom for each cause corresponding to the error or the error symptom, and manages report destinations such as the maintenance company terminal 5 and the worker terminal 6 corresponding to the error or the error symptom. A maintenance company is a company that manages the maintenance of the ATM 2. The maintenance company terminal 5 is a terminal device of the maintenance company. The worker terminal 6 is a certain terminal device carried by a worker who goes to the location of the ATM 2 and performs the recovery work for the ATM 2.

The cause estimation device 3 is connected to each of the ATMs 2 through a communication network (not illustrated) and is also connected to the management device 4 through a communication network. The ATM 2 is connected to the communication network through a wired or wireless line. Communications over the wireless line are implemented by a local area network (LAN), a low power wide area (LPWA), or the like. The management device 4 is connected to the maintenance company terminal 5 through a communication network. Furthermore, the maintenance company terminal 5 is assumed to be in wireless connection with the worker terminal 6 through a communication network.

The ATM 2 notifies the cause estimation device 3 of status data on the inside of the ATM 2, examples of which include detection results from various sensors or the like in the ATM 2, via a wireless LAN at a predetermined interval. The status data is assumed to include a status ID identifying the ATM 2 and status data. The cause estimation device 3 collects the status data on each ATM 2 and stores the collected status data on each ATM 2 in a status data DB 3A. The cause estimation device 3 generates teaching data for determining the presence/absence of an error and the error type of each ATM 2 by using, for example, artificial intelligence (AI) based on the status data on the ATM 2 stored in the status data DB 3A. The cause estimation device 3 stores the generated teaching data in a teaching data DB 3B. Furthermore, the cause estimation device 3 generates a learning model for estimating the cause related to the error or the error symptom of the ATM 2 from the teaching data stored in the teaching data DB 3B, and stores the generated learning model in a learning model DB 3C.

Upon detecting an error or an error symptom of the ATM 2 based on the status data from the ATM 2, the cause estimation device 3 notifies the management device 4 of a report on the error or the error symptom. The report is assumed to include a device ID identifying the ATM 2 in which the error or the error symptom is detected. Upon detecting the report on the error or the error symptom of the ATM 2 from the cause estimation device 3, the management device 4 notifies the maintenance company terminal 5, which is the report destination, of the report on the error or the error symptom. A person in charge of the maintenance company terminal 5 can recognize the ATM 2 in which the error or the error symptom is detected, based on the device ID in the report. Upon detecting the report on the error or the error symptom of the ATM 2 from the management device 4, the maintenance company terminal 5 notifies the worker terminal 6 of the report on the error or the error symptom of the ATM **2.** The worker using the worker terminal 6 can recognize the ATM 2 in which the error or the error symptom is detected, based on the device ID in the report.

Furthermore, the cause estimation device 3 estimates the cause of the error or the error symptom of the ATM 2 based on the learning model in the learning model DB 3C, and notifies the management device 4 of the cause, which is a result of the estimation. The cause includes the reliability of the presence/absence of an error and the reliability of the error type. The management device 4 is connected to a management DB 4A. The management DB4A manages a recovery procedure table 4B and a report destination table 4C. The recovery procedure table 4B is a table that stores a recovery procedure for resolving an error or an error symptom for each cause related to the error or the error symptom. The recovery procedure includes, for example, information on a procedure for resolving an error or an error symptom, a part ID identifying a replacement part, and the like. The report destination table 4C is a table that stores contact information on the maintenance company terminal 5 and the worker terminal 6 for each cause related to an error or an error symptom. Upon receiving a cause corresponding to an error or an error symptom of the ATM 2, the management device 4 notifies the maintenance company terminal 5 and the worker terminal 6 of the recovery procedure corresponding to the cause.

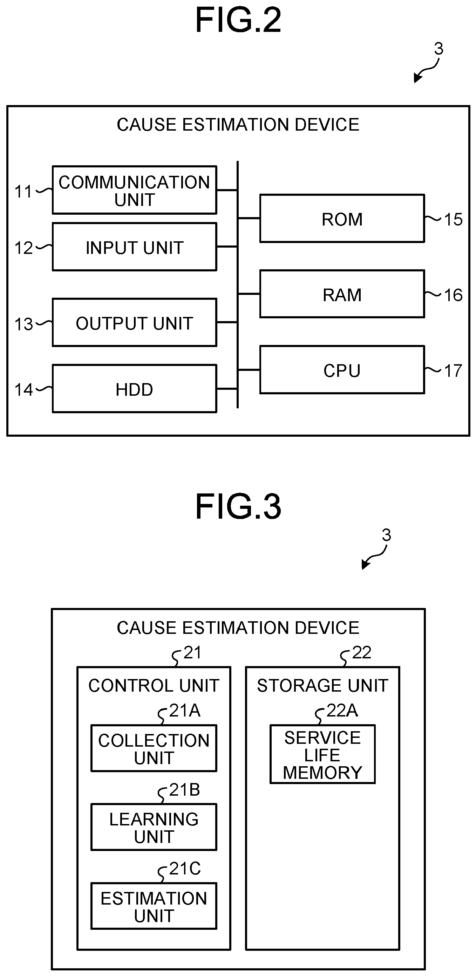

FIG. 2 is an explanatory diagram illustrating an example of a hardware configuration of the cause estimation device **3.** The cause estimation device 3 illustrated in FIG. 2 includes a communication unit 11, an input unit 12, an output unit 13, a hard disk drive (HDD) 14, a read only memory (ROM) 15, and a random access memory (RAM) 16, and a central processing unit (CPU) 17. The communication unit 11 is an interface that controls communications with communication networks. The input unit 12 is an input interface of the cause estimation device **3.** The output unit 13 is an output interface of the cause estimation device **3.** The HDD 14 stores various types of information. The ROM 15 stores various programs and the like. The RAM 16 stores various types of information. The CPU 17 controls the cause estimation device 3 as a whole. The CPU 17 loads various programs stored in the ROM 15, onto the RAM 16 and executes functions.

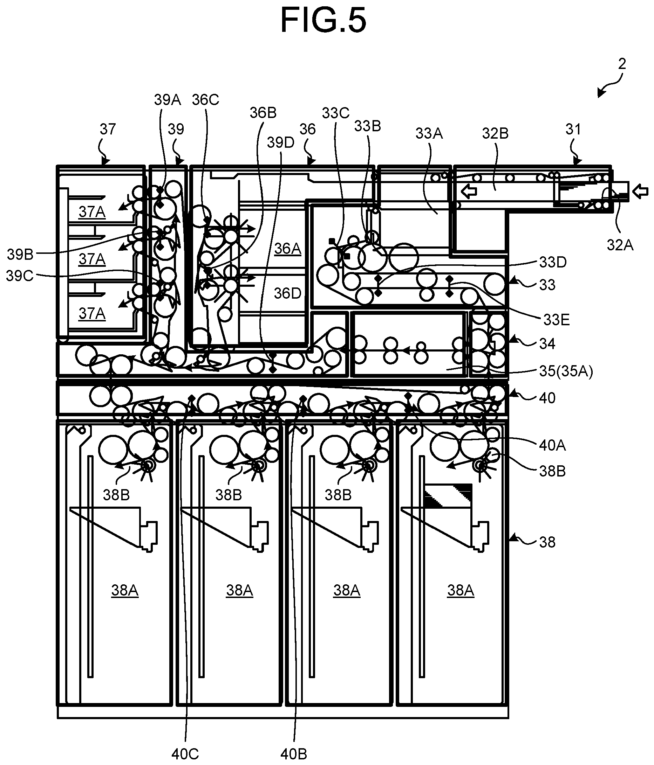

FIG. 3 is a block diagram illustrating an example of a functional configuration of the cause estimation device 3. The cause estimation device 3 illustrated in FIG. 3 includes a control unit 21 and a storage unit 22. The control unit 21 includes a collection unit 21A, a learning unit 21B, and an estimation unit 21C. The collection unit 21A collects the status data on each ATM 2 through the communication network, and stores the collected status data on each ATM 2 in the status data DB 3A. The learning unit 21B executes supervised learning to generate teaching data based on the status data on each ATM 2 and generate a learning model based on the generated teaching **data.** The learning unit 21B generates a learning model for estimating the cause of an error or an error symptom of the ATM 2 based on the teaching data stored in the teaching data DB 3B. Furthermore, the learning unit 21B stores the generated learning model in the learning model DB 3C. Upon detecting an error or an error symptom of the ATM 2 from the status data collected by the collection unit 21A, the estimation unit 21C estimates the cause related to the error or the error symptom based on the learning model stored in the learning model DB 3C, and outputs the cause, which is a result of the estimation, to the management device **4.** The storage unit 22 includes a service life memory 22A. The service life memory 22A manages service life information including a device ID identifying the ATM 2, a part ID identifying a unit in the ATM 2, and a service life of the unit. This unit is a plurality of various units illustrated in FIG. 5 forming the ATM 2. Upon detecting an error or error symptom of the ATM 2 from the status data collected by the collection unit 21A, the estimation unit 21C refers to the service life of each unit of the ATM 2 managed in the service life memory 22A, and identifies the unit the service life of which has expired. Then, the estimation unit 21C notifies the management device 4 of the part ID identifying the identified unit together with the cause.

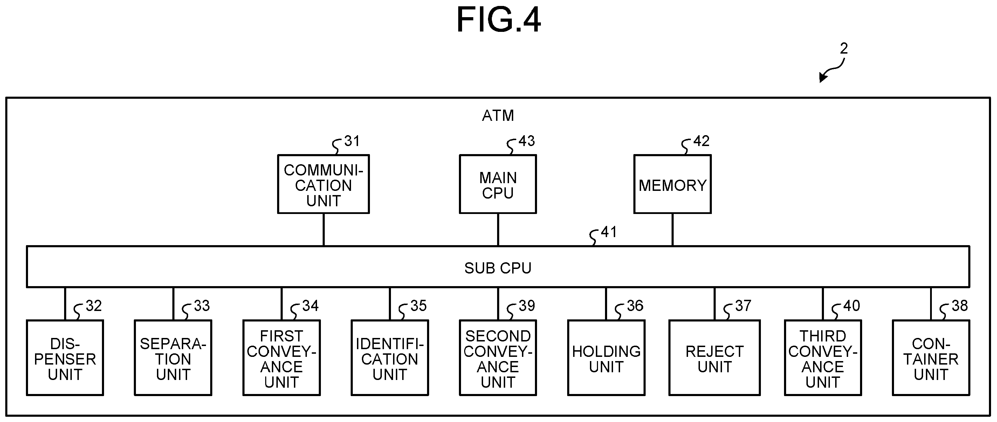

FIG. 4 is an explanatory diagram illustrating an example of the ATM 2. The ATM 2 illustrated in FIG. 4 includes a communication unit 31, a dispenser unit 32, a separation unit 33, a first conveyance unit 34, an identification unit 35, and a holding unit 36. The ATM 2 includes a reject unit 37, a container unit 38, a second conveyance unit 39, a third conveyance unit 40, a sub CPU 41, a memory 42, and a main CPU 43. Although the sub CPU 41 and the main CPU 43 are described as separate units, they may be integrated and can be modified as appropriate. The communication unit 31 is an interface for connecting with a communication line and wirelessly connecting with a wireless LAN.

FIG. 5 is an explanatory diagram illustrating an example of a unit configuration in the ATM 2. The dispenser unit 32 illustrated in FIG. 5 is a unit through which banknotes are input into the ATM 2 and from which the banknotes stored in the ATM 2 are returned. The separation unit 33 is a unit for separating a wad of banknotes, fed through the dispenser unit 32, into banknotes. The first conveyance unit 34 is a unit for conveying the banknotes, as a result of the separation by the separation unit 33, to the identification unit 35. The identification unit 35 is a unit for identifying the banknotes from the first conveyance unit 34. The holding unit 36 is a unit for temporarily holding banknotes. The reject unit 37 is a unit for storing rejected banknotes. The second conveyance unit 39 is a unit for conveying banknotes among the identification unit 35, the holding unit 36, the reject unit 37, and the third conveyance unit 40. The container unit 38 is a unit for containing banknotes. The third conveyance unit 40 is a unit for conveying banknotes between the second conveyance unit 39 and the container unit 38.

The sub CPU 41 controls the dispenser unit 32, the separation unit 33, the first conveyance unit 34, the identification unit 35, the second conveyance unit 39, the holding unit 36, the reject unit 37, the third conveyance unit 40, and the container unit 38. The memory 42 stores various types of information. The main CPU 43 controls the ATM 2 as a whole.

The dispenser unit 32 includes a deposit/dispenser port 32A for depositing/withdrawing banknotes, and a wad conveyance path 32B for transporting a wad of banknotes at the deposit/dispenser port 32A. The separation unit 33 includes a separation side holding section 33A for temporarily containing banknotes, a feed out unit 33B for feeding out one banknote at a time from a wad of banknotes stored in the separation side holding section 33A, and three sensors 33C, 33D, and 33E for detecting passage of a banknote on the conveyance path in the separation unit 33. The identification unit 35 includes an identification section 35A that identifies banknotes on the conveyance path. The identification section 35A identifies a normal banknote, a reject banknote, or the like on the conveyance path. The holding unit 36 includes two temporary holding sections 36A and 36D for temporarily holding the conveyed banknotes. The temporary holding section 36A is an abnormal banknote holding section that temporarily holds abnormal banknotes in the conveyed banknotes. The temporary holding section 36D is a normal banknote holding section that temporarily holds normal banknotes in the conveyed banknotes. The holding unit 36 has a sensor 36C for detecting passage of an abnormal banknote when storing the abnormal banknote in the temporary holding section 36A, and a sensor 36B for detecting the passage of a normal banknote when storing the normal banknote in the temporary holding section 36D. The reject unit 37 has three reject sections 37A for containing reject banknotes. The second conveyance unit 39 includes three sensors 39A, 39B, and 39C for detecting passage of the conveyed banknotes when storing the conveyed banknotes in the reject section 37A, and one sensor 39D for detecting passage of the conveyed banknotes from the identification section 35A. The container unit 38 has four container cassettes 38A for storing banknotes conveyed from the third conveyance unit 40. The container cassettes 38A each have a feed out unit 38B that feeds out the contained banknotes to the third conveyance unit 40. The third conveyance unit 40 includes three sensors 40A, 40B and 40C for detecting passage of the conveyed banknotes, when the conveyed banknotes are stored in the container cassettes 38A in the container unit 38.

A plurality of conveyance rollers, feed rubber members, and the like are assumed to be provided on the conveyance path for conveying banknotes in the dispenser unit 32, the separation unit 33, the first conveyance unit 34, the identification unit 35, the second conveyance unit 39, the holding unit 36, the reject unit 37, the third conveyance unit 40, and the container unit 38. The sub CPU 41 collects sensor results from various sensors including the sensors on the conveyance path in each unit. The sub CPU 41 transmits the collected status data, such as the sensor results, to the cause estimation device 3 over the wireless LAN via the communication unit 31 at a predetermined interval.

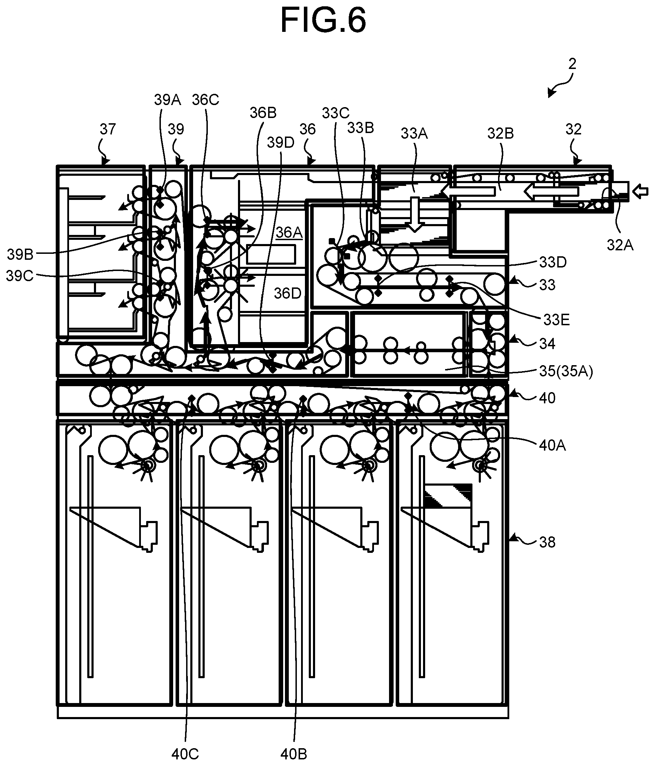

FIG. 6 is an explanatory diagram illustrating an example of an operation performed by the ATM 2 when banknotes are deposited. A user of the ATM 2 feeds banknotes through the deposit/dispenser port 32A in the dispenser unit 32 of the ATM 2. The dispenser unit 32 temporarily accumulates the deposited banknotes, fed from the deposit/dispenser port 32A, in the separation side holding section 33A in the separation unit 33. The feed out unit 33B in the separation unit 33 sequentially feeds out deposited banknotes one by one from the wad of deposited banknotes accumulated in the separation side holding section 33A, and sequentially conveys the deposited banknotes thus fed out to the identification unit 35 via the first conveyance unit 34. The ATM 2 counts the number of banknotes using a sensor or the like each time the deposited banknotes accumulated in the separation side holding section 33A are fed out one by one. The identification section 35A in the identification unit 35 identifies the deposited banknotes thus conveyed, and sequentially conveys them to the second conveyance unit 39. The second conveyance unit 39 sequentially conveys the normal banknotes identified to the temporary holding section 36D in the holding unit 36. On the other hand, the abnormal banknotes identified are sequentially conveyed to the temporary holding section 36A in the holding unit 36. The temporary holding section 36D sequentially accumulates the deposited normal banknotes from the second conveyance unit 39. The temporary holding section 36A sequentially accumulates the deposited abnormal banknotes from the second conveyance unit 39. The second conveyance unit 39 conveys both normal banknotes and abnormal banknotes.

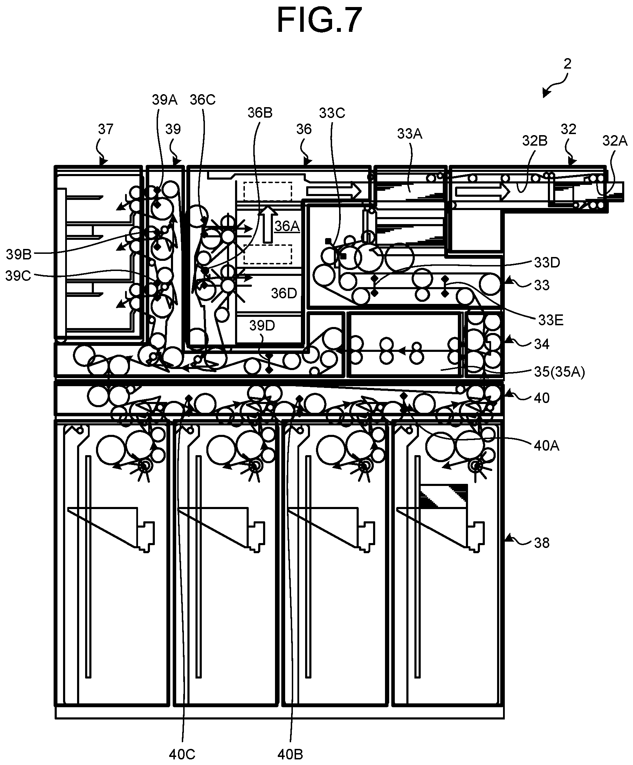

FIG. 7 is an explanatory diagram illustrating an example of an operation performed by the ATM 2 when a deposited banknote is returned. The temporary holding section 36D in the holding unit 36 conveys the wad of accumulated deposited normal banknotes to the separation side holding section 33A in the separation unit 33. The separation unit 33 returns the wad of deposited normal banknotes accumulated in the separation side holding section 33A, from the deposit/dispenser port 32A in the dispenser unit 32. The temporary holding section 36A returns the wad of accumulated deposited abnormal banknotes from the deposit/dispenser port 32A (such banknotes are not accepted).

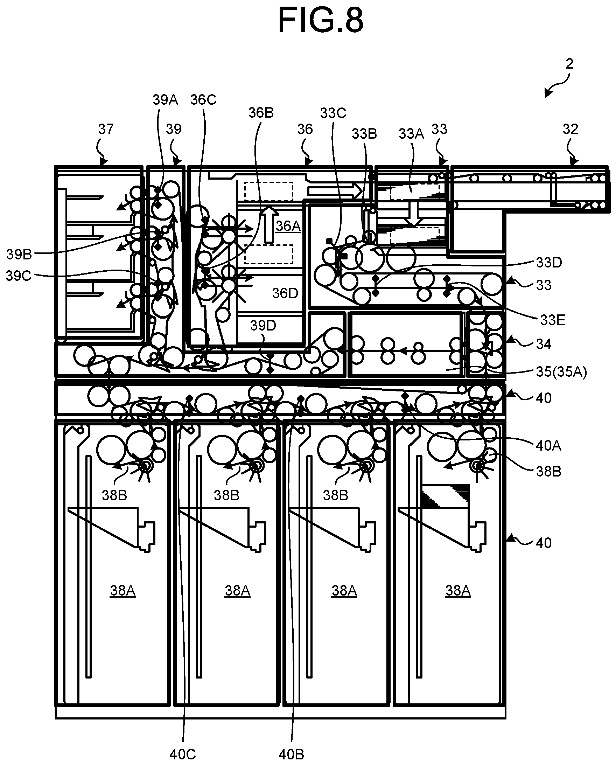

FIG. 8 is an explanatory diagram illustrating an example of an operation performed by the ATM 2 when a deposited banknote is stored. The temporary holding section 36D in the holding unit 36 conveys the wad of accumulated deposited normal banknotes to the separation side holding section 33A in the separation unit 33. The feed out unit 33B in the separation unit 33 sequentially feeds out deposited normal banknotes one by one from the wad of deposited banknotes accumulated in the separation side holding section 33A, and sequentially conveys the deposited banknotes thus fed out to the identification section 35A in the identification unit 35 via the first conveyance unit 34. The identification section 35A identifies the deposited banknotes and sequentially conveys them to the second conveyance unit 39. The second conveyance unit 39 sequentially conveys the deposited normal banknotes identified to the third conveyance unit 40. The third conveyance unit 40 sequentially conveys the deposited normal banknotes to each container cassette 38A in the container unit 38. The deposited normal banknotes are sequentially accumulated in each container cassette 38A in the container unit 38.

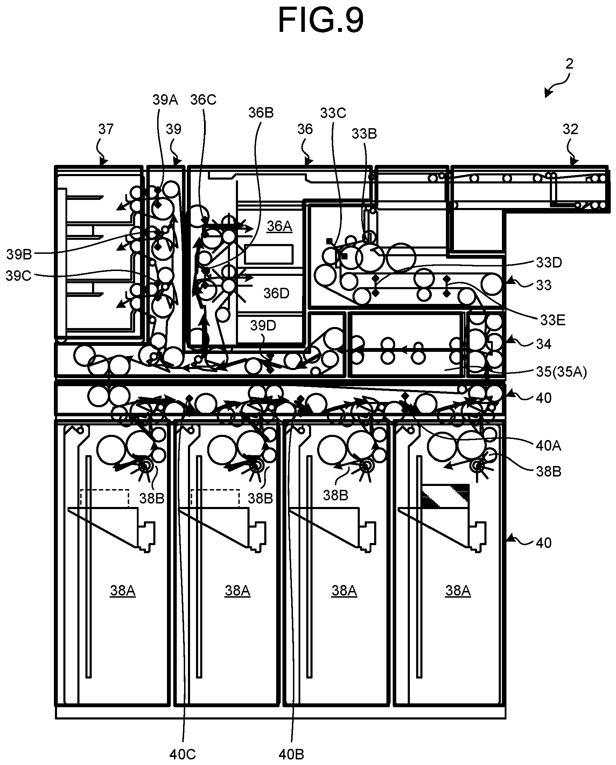

FIG. 9 is an explanatory diagram illustrating an example of an operation performed by the ATM 2 when banknotes are withdrawn. The feed out unit 38B in the container unit 38 sequentially feeds out withdrawn banknotes one by one from the wad of withdrawn banknotes contained in the container cassette 38A, and sequentially conveys the withdrawn banknotes thus fed out to the third conveyance unit 40. The third conveyance unit 40 sequentially conveys the conveyed withdrawn banknotes to the identification unit 35 via the first conveyance unit 34. The identification section 35A in the identification unit 35 identifies the conveyed withdrawn banknotes. The identification section 35A sequentially conveys the withdrawn banknotes identified to the second conveyance unit 39. The second conveyance unit 39 sequentially accumulates the withdrawn normal banknotes in the temporary holding section 36D in the holding unit 36, so that a wad of the withdrawn banknotes is accumulated. When the withdrawn banknotes are abnormal banknotes, the second conveyance unit 39 accumulates the abnormal withdrawn banknotes in the reject section 37A.

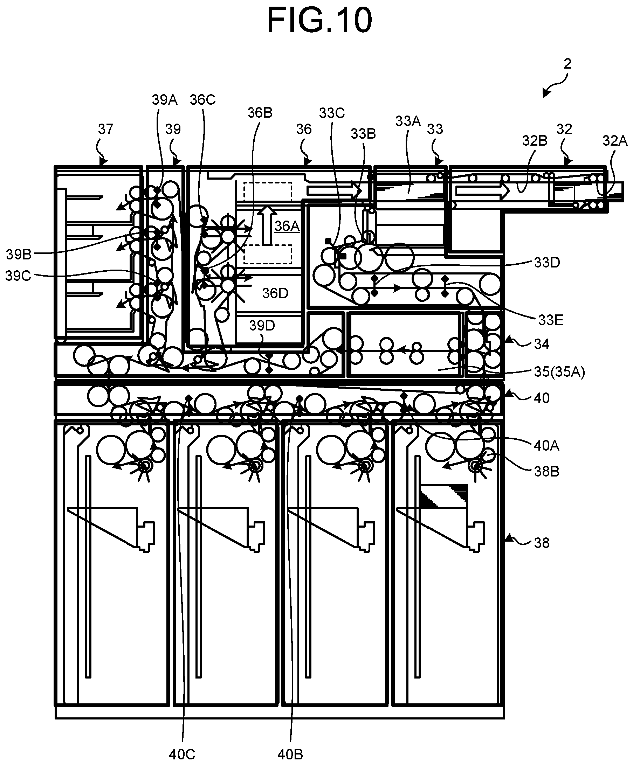

FIG. 10 is an explanatory diagram illustrating an example of an operation performed by the ATM 2 when banknotes are withdrawn. The temporary holding section 36D in the holding unit 36 conveys the wad of accumulated withdrawn banknotes to the separation side holding section 33A in the separation unit 33. The separation unit 33 returns the wad of withdrawn banknotes conveyed to the separation side holding section 33A, from the deposit/dispenser port 32A in the dispenser unit 32.

The collection unit 21A in the cause estimation device 3 illustrated in FIG. 1 collects status data from each ATM 2 over a wireless LAN, and stores the collected status data on each ATM 2 in the status data DB 3A. The status data is information such as sensor results from various sensors in the units in the ATM 2. The learning unit 21B in the cause estimation device 3 generates teaching data based on the status data stored in the status data DB 3A, and stores the generated teaching data in the teaching data DB 3B. The learning unit 21B generates a learning model for estimating the cause related to an error or an error symptom of the ATM 2 based on the teaching data stored in the teaching data DB 3B. The learning unit 21B sequentially stores the generated learning model in the learning model DB 3C. Upon detecting an error or an error symptom from the status data on each ATM 2, the estimation unit 21C in the cause estimation device 3 identifies the location of occurrence of the error or the error symptom from the sensor results in each unit in the ATM 2. Furthermore, the estimation unit 21C estimates the cause related to an error or an error symptom based on the learning model, and notifies the management device 4 of the cause, which is a result of the estimation. Upon receiving the cause, the management device 4 refers to the recovery procedure table 4B, acquires the recovery procedure corresponding to the cause, and notifies the maintenance company terminal 5 and the worker terminal 6 of the recovery procedure.

Upon receiving the recovery procedure from the management device 4, the maintenance company terminal 5 and the worker terminal 6 display the recovery procedure on a display unit not illustrated. The person in charge of the maintenance company terminal 5 can prepare a replacement part if there is a part ID of the replacement part or the like in the recovery procedure, while visually checking the recovery procedure.

The worker using the worker terminal 6 receives a replacement part from the maintenance company if there is a part ID of the replacement part or the like in the recovery procedure, while visually checking the recovery procedure, and performs recovery work at the installation location of the ATM 2 with the error while viewing the recovery procedure.

When there is a plurality of causes of an error or an error symptom, the cause estimation device 3 notifies the management device 4 of the plurality of causes. The management device 4 notifies the worker terminal 6 and the maintenance company terminal 5 of the recovery procedure corresponding to the plurality of causes. When the worker terminal 6 and the maintenance company terminal 5 receive a plurality of recovery procedures corresponding to a plurality of causes, the plurality of recovery procedures are displayed in descending order of probability.

Furthermore, after the recovery from the error or the error symptom of the ATM 2 is achieved by the worker, the cause estimation device 3 automatically collects the status data on the ATM 2 after the recovery through the collection unit 21A, and thus the post-recovery maintenance can be executed on the ATM 2.

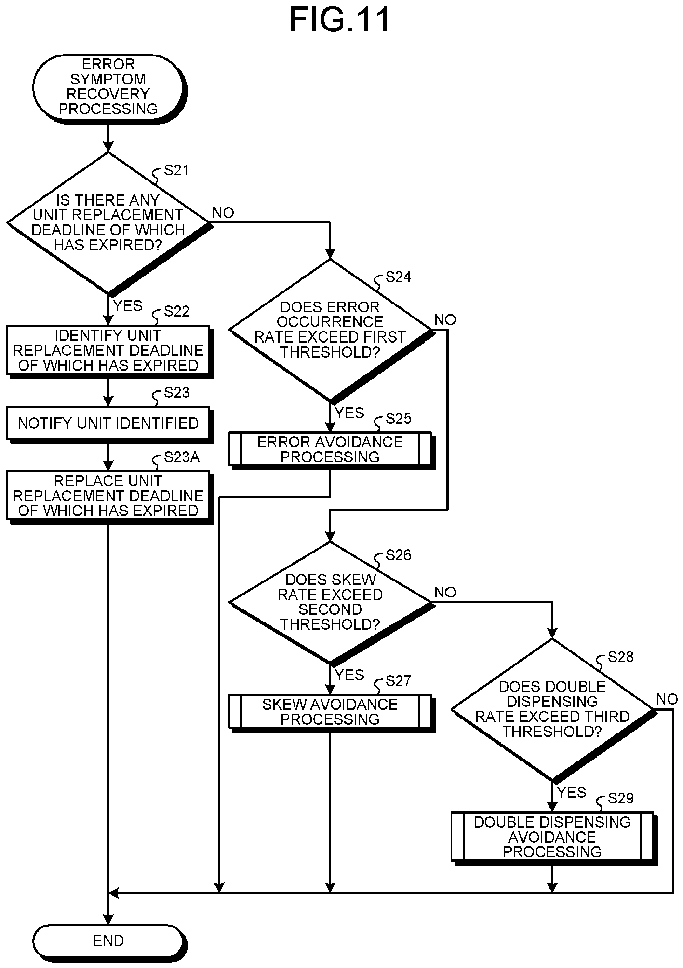

FIG. 11 is a flowchart illustrating an example of a processing operation, related to error symptom recovery processing, performed by the cause estimation device 3 and the management device 4. For example, the error symptom recovery processing is processing of estimating the cause of the error symptom of the ATM 2 based on the unit replacement deadline, error occurrence rate, skew rate, double dispensing rate, and the like, and notifying the worker terminal 6 and the maintenance company terminal 5 of the recovery procedure for the cause, which is a result of the estimation. The control unit 21 in the cause estimation device 3 refers to the service life memory 22A, and determines whether the units 32 to 40 in each ATM 2 include any unit the replacement deadline of which has expired (step S21). When there is a unit the replacement deadline of which has expired (step S21: Yes), the control unit 21 identifies the unit the replacement deadline of which has expired (step S22). The control unit 21 notifies the management device 4 of the information identifying the unit the replacement deadline of which has expired (step S23). The information includes a device ID identifying the ATM 2 as a replacement target and a part ID identifying the unit to be replaced. Upon receiving the information identifying the unit the replacement deadline of which has expired, the management device 4 notifies the maintenance company terminal 5 and the worker terminal 6 of the recovery procedure related to the replacement of the unit the replacement deadline of which has expired (step S23A). As a result, the person in charge of the maintenance company terminal 5 prepares a replacement unit for the ATM 2 that is the replacement target, while viewing the device ID and the replacement part ID in the recovery procedure. Furthermore, the worker using the worker terminal 6 can receive the replacement part from the maintenance company, while viewing the part ID in the recovery procedure, and perform the replacement work at the location of the ATM 2 that is the replacement target, while viewing the device ID in the recovery procedure.

When there is no unit the replacement deadline of which has expired (step S21: No), the control unit 21 determines whether the error occurrence rate exceeds a first threshold (step S24). The first threshold is, for example, 10%. When the error occurrence rate exceeds the first threshold (step S24: Yes), the control unit 21 executes error avoidance processing (step S25), and ends the processing operation illustrated in FIG. 11. The error avoidance processing is processing of estimating the cause of each error symptom of the ATM 2 and notifying the worker terminal 6 and the maintenance company terminal 5 of the recovery procedure for the cause of the error symptom.

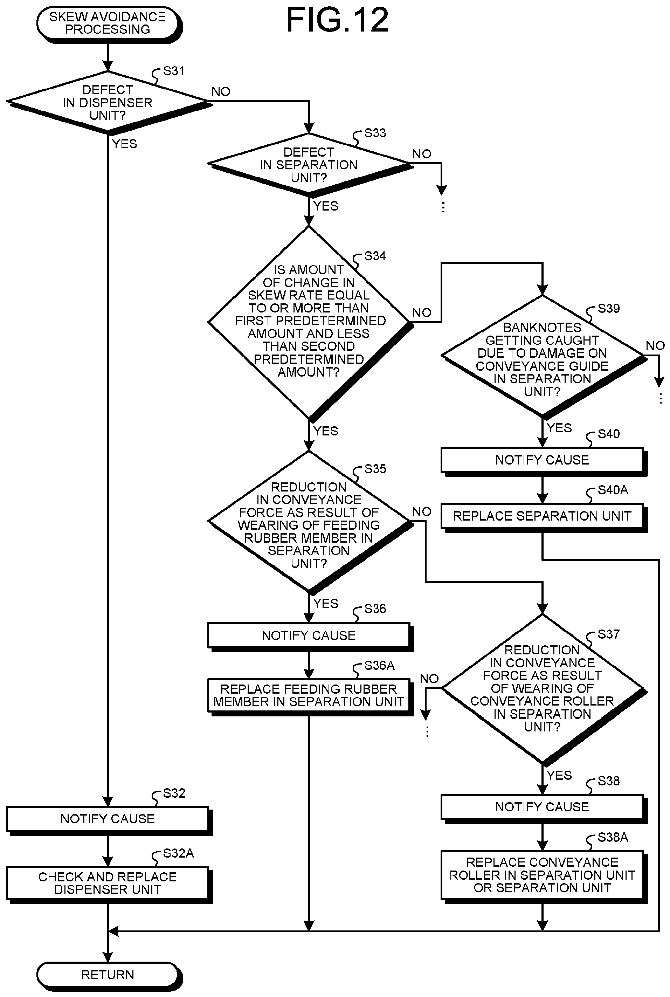

When the error occurrence rate does not exceed the first threshold (step S24: No), the control unit 21 determines whether the skew rate exceeds a second threshold (step S26). The skew rate is the ratio of the number of banknote skews to a transaction unit, which is, for example, 1000 or more banknotes dispensed. The second threshold is, for example, 10%. When the skew rate exceeds the second threshold (step S26: Yes), the control unit 21 executes skew avoidance processing illustrated in FIG. 12 (step S27), and ends the processing operation illustrated in FIG. 11. The skew avoidance processing is processing of estimating the cause of a rise in the skew rate in the ATM 2, and notifying the worker terminal 6 and the maintenance company terminal 5 of the recovery procedure for the cause of the rise in the skew rate.

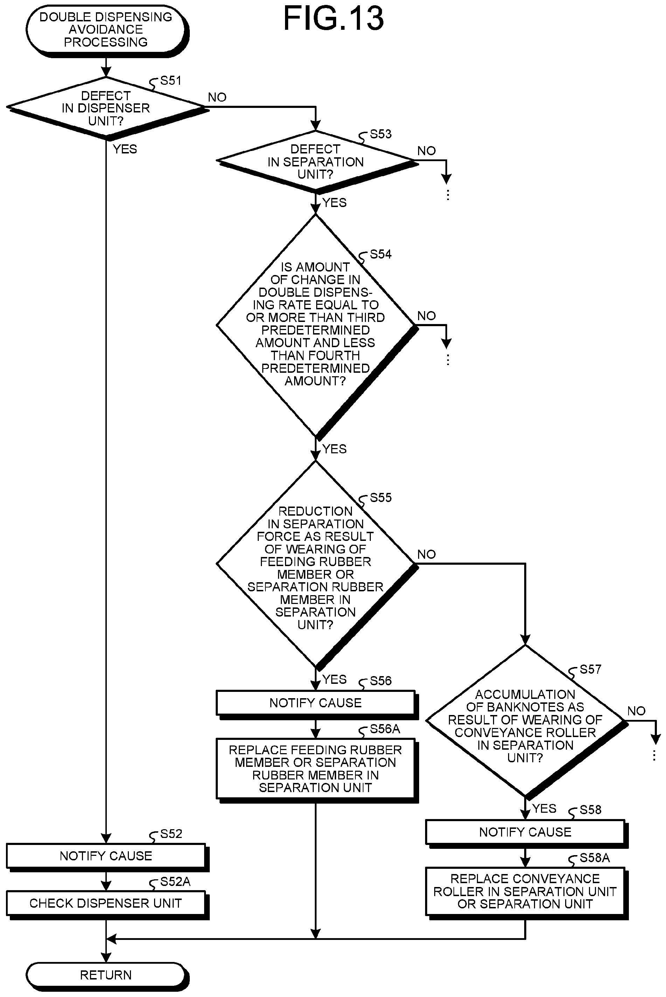

When the skew rate does not exceed the second threshold (step S26: No), the control unit 21 determines whether the double dispensing rate exceeds a third threshold (step S28). The double dispensing rate is the ratio of the number of banknotes dispensed in an overlapping manner (double dispensing) to a transaction unit, which is, for example, 1000 or more banknotes dispensed. The third threshold is, for example, 10%. When the double dispensing rate exceeds the third threshold (step S28: Yes), the control unit 21 executes double dispensing avoidance processing illustrated in FIG. 13 (step S29), and ends the processing operation illustrated in FIG. 11. The double dispensing avoidance processing is processing of estimating the cause of a rise in the double dispensing rate in the ATM 2, and notifying the worker terminal 6 and the maintenance company terminal 5 of the recovery procedure for the cause of the rise in the double dispensing rate.

When the double dispensing rate does not exceed the third threshold (step S28: No), the control unit 21 ends the processing operation illustrated in FIG. 11.

Upon identifying the unit the replacement deadline of which has expired, the cause estimation device 3 illustrated in FIG. 11 notifies the management device 4 of the replacement of the unit the replacement deadline of which has expired. The management device 4 notifies the worker terminal 6 and the maintenance company terminal 5 of the recovery procedure related to the replacement of the unit the replacement deadline of which has expired. As a result, the person in charge of the maintenance company terminal 5 can prepare the unit the replacement deadline of which has expired, while viewing the recovery procedure. Furthermore, the worker using the worker terminal 6 can receive a unit to replace the unit the replacement deadline of which has expired from the maintenance company, while viewing the recovery procedure, and perform the replacement work at the location of the ATM 2 that is the replacement target.

When the error occurrence rate exceeds the first threshold, the cause estimation device 3 estimates the cause of the error occurrence rate exceeding the first threshold, and notifies the management device 4 of the cause, which is a result of the estimation. The management device 4 notifies the worker terminal 6 and the maintenance company terminal 5 of the recovery procedure for the cause of the error occurrence rate exceeding the first threshold. As a result, the person in charge of the maintenance company terminal 5 can prepare a replacement part, while viewing the recovery procedure. Furthermore, when there is an error symptom due to a rise in the error occurrence rate, the worker using the worker terminal 6 can receive the replacement part from the maintenance company, while viewing the recovery procedure, and perform work at the location of the ATM 2 that is the replacement target to avoid the error in advance.

When the skew rate exceeds the second threshold, the cause estimation device 3 estimates the cause of the skew rate exceeding the second threshold, and notifies the management device 4 of the cause, which is a result of the estimation. The management device 4 notifies the worker terminal 6 and the maintenance company terminal 5 of the recovery procedure for the cause of the skew rate exceeding the second threshold. As a result, the person in charge of the maintenance company terminal 5 can prepare a replacement part, while viewing the recovery procedure. Furthermore, when there is an error symptom due to a rise in the skew rate, the worker using the worker terminal 6 can receive the replacement part from the maintenance company, while viewing the recovery procedure, and perform work at the location of the ATM 2 that is the replacement target to avoid the error due to the rise in the skew rate in advance.

When the double dispensing rate exceeds the third threshold, the cause estimation device 3 estimates the cause of the double dispensing rate exceeding the third threshold, and notifies the management device 4 of the cause, which is a result of the estimation. The management device 4 notifies the worker terminal 6 and the maintenance company terminal 5 of the recovery procedure for the cause of the double dispensing rate exceeding the third threshold. As a result, the person in charge of the maintenance company terminal 5 can prepare a replacement part, while viewing the recovery procedure. Furthermore, when there is an error symptom due to a rise in the double dispensing rate, the worker using the worker terminal 6 can receive the replacement part from the maintenance company, while viewing the recovery procedure, and perform work at the location of the ATM 2 that is the replacement target to avoid the error due to the rise in the double dispensing rate in advance.

FIG. 12 is a flowchart illustrating an example of a processing operation, related to skew avoidance processing, performed by the cause estimation device 3 and the management device 4. The control unit 21 in the cause estimation device 3 determines whether the skew is due to a defect in the dispenser unit 32 (step S31). When the skew is due to a defect in the dispenser unit 32 (step S31: Yes), the control unit 21 estimates the skew due to the defect in the dispenser unit 32 is the cause of the error symptom, and notifies the management device 4 of the cause, which is a result of the estimation (step S32). The management device 4 notifies the worker terminal 6 and the maintenance company terminal 5 of the recovery procedure, such as checking the dispenser unit 32 or replacement of the dispenser unit 32, for the cause of the error symptom (step S32A), and ends the processing operation illustrated in FIG. 12. As a result, the person in charge of the worker terminal 6 can check the dispenser unit 32, while viewing the recovery procedure, and depending on the situation, replace the dispenser unit 32 with the replacement part he or she has brought, to avoid an error due to a rise in the skew rate in advance.

When the skew is not due to a defect in the dispenser unit 32 (step S31: No), the control unit 21 determines whether the skew is due to a defect in the separation unit 33 (step S33). When the skew is due to a defect in the separation unit 33 (step S33: Yes), the control unit 21 determines whether the amount of change in the skew rate is equal to or more than a first predetermined amount and less than a second predetermined amount (Step S34).

When the amount of change in the skew rate is equal to or more than the first predetermined amount and less than the second predetermined amount (step S34: Yes), the control unit 21 determines that the amount of change in the skew rate is gradually increasing, and determines whether the skew is due to a reduction in the conveyance force as a result of wearing of a feeding rubber member in the separation unit 33 (step S35). When the skew is due to a reduction in the conveyance force as a result of wearing of the feeding rubber member (step S35: Yes), the control unit 21 estimates the skew due to the reduction in the conveyance force as a result of wearing of the feeding rubber member is the cause of the error symptom, and notifies the management device 4 of the cause, which is a result of the estimation (step S36). The management device 4 notifies the worker terminal 6 and the maintenance company terminal 5 of the recovery procedure, as the replacement of the feeding rubber member in the separation unit 33, for the cause of the error symptom (step S36A), and ends the processing operation illustrated in FIG. **12****.** As a result, the person in charge of the worker terminal 6 can replace the feeding rubber member in the separation unit 33, while viewing the recovery procedure, to avoid the error due to a rise in the skew rate in advance.

When the skew is not due to a reduction in the conveyance force as a result of wearing of the feeding rubber member (step S35: No), the control unit 21 determines whether the skew is due to reduction in the conveyance force as a result of wearing of a conveyance roller in the separation unit 33 (step S37). When the skew is due to the reduction in the conveyance force as a result of wearing of the conveyance roller (step S37: Yes), the control unit 21 estimates the skew due to the reduction in the conveyance force as a result of wearing of the conveyance roller is the cause of the error symptom, and notifies the management device 4 of the cause, which is a result of the estimation (step S38). The management device 4 notifies the worker terminal 6 and the maintenance company terminal 5 of the recovery procedure, as the replacement of the conveyance roller in the separation unit 33 or the separation unit 33 as a whole, for the cause of the error symptom (step S38A), and ends the processing operation illustrated in FIG. **12****.** As a result, the person in charge of the worker terminal 6 can replace the conveyance roller in the separation unit 33 or the separation unit 33 as a whole, while viewing the recovery procedure, to avoid the error due to a rise in the skew rate in advance.

When the skew is not due to the reduction in the conveyance force as a result of wearing of the conveyance roller (step S37: No), the control unit 21 continues to estimate other causes of the error symptom due to the skew, and notifies the management device 4 of the cause, which is a result of the estimation. The management device 4 then notifies the worker terminal 6 and the maintenance company terminal 5 of the recovery procedure for the cause. As a result, the person in charge of the worker terminal 6 can execute the recovery work, while viewing the recovery procedure, to avoid the error due to a rise in the skew rate in advance.

When the amount of change in the skew rate is not equal to or more than the first predetermined amount or not less than the second predetermined amount (step S34: No), the control unit 21 determines that the amount of change in the skew rate is sharply increasing, and determines whether the skew is due to banknotes getting caught due to damage on a conveyance guide in the separation unit 33 (step S39). When the skew is due to banknotes getting caught due to damage on a conveyance guide (step S39: Yes), the control unit 21 estimates the skew due to banknotes getting caught due to damage on the conveyance guide is the cause of the error symptom, and notifies the management device 4 of the cause, which is a result the estimation (step S40). The management device 4 notifies the worker terminal 6 and the maintenance company terminal 5 of the recovery procedure for replacing the separation unit 33 for the cause of the error symptom (step S40A), and ends the processing operation illustrated in FIG. **12****.** As a result, the person in charge of the worker terminal 6 can replace the separation unit 33, while viewing the recovery procedure, to avoid the error due to a rise in the skew rate in advance.

When the skew is not due to banknotes getting caught due to damage on a conveyance guide (step S39: No), the control unit 21 continues to estimate other causes of the error symptom due to the skew, and notifies the management device 4 of the cause, which is a result of the estimation. The management device 4 then notifies the worker terminal 6 and the maintenance company terminal 5 of the recovery procedure for the cause. As a result, the person in charge of the worker terminal 6 can execute the recovery work, while viewing the recovery procedure, to avoid the error due to a rise in the skew rate in advance.

When the skew is not due to a defect in the separation unit (step S33: No), the control unit 21 continues to estimate in sequence whether the skew is due to a defect in other units other than the dispenser unit 32 and the separation unit 33, and notifies the management device 4 of the cause of the error symptom confirmed. For convenience of explanation, for example, the case where skew is a defect in the dispenser unit 32 and the separation unit 33 is illustrated. However, with respect to skew, the causes due to defects in the first conveyance unit 34, the identification unit 35, the holding unit 36, the reject unit 37, the container unit 38, the second conveyance unit 39, and the third conveyance unit 40 are estimated in sequence. The management device 4 then notifies the worker terminal 6 and the maintenance company terminal 5 of the recovery procedure for the cause, which is a result of the estimation. As a result, the person in charge of the worker terminal 6 can execute the recovery work, while viewing the recovery procedure, to avoid the error due to a rise in the skew rate in advance.

FIG. 13 is a flowchart illustrating an example of a processing operation, related to double dispensing avoidance processing, performed by the cause estimation device 3 and the management device 4. The control unit 21 in the cause estimation device 3 determines whether the double dispensing is due to a defect in the dispenser unit 32 (step S51). When the double dispensing is due to a defect in the dispenser unit 32 (step S51: Yes), the control unit 21 estimates the double dispensing due to the defect in the dispenser unit 32 is the cause of the error symptom, and notifies the management device 4 of the cause, which is a result of the estimation (step S52). The management device 4 notifies the worker terminal 6 and the maintenance company terminal 5 of the recovery procedure for checking the dispenser unit 32 for the cause of the error symptom (step S52A), and ends the processing operation illustrated in FIG. 13. As a result, the person in charge of the worker terminal 6 can check the dispenser unit 32, while viewing the recovery procedure, to avoid the error due to a rise in the double dispensing rate in advance.

When the double dispensing is not due to a defect in the dispenser unit 32 (step S51: No), the control unit 21 determines whether the double dispensing is due to a defect in the separation unit 33 (step S53). When the double dispensing is due to a defect in the separation unit 33 (step S53: Yes), the control unit 21 determines whether the amount of change in the double dispensing rate is equal to or more than a third predetermined amount and less than a fourth predetermined amount (Step S54).

When the amount of change in the double dispensing rate is equal to or more than the third predetermined amount and less than the fourth predetermined amount (step S54: Yes), the control unit 21 determines that the amount of change in the double dispensing rate is gradually increasing. The control unit 21 then determines whether the double dispensing is due to reduction in separation force as a result of wearing of a feeding rubber member or separation rubber member in the separation unit 33 (step S55). When the double dispensing is due to the reduction in the separation force as a result of wearing of a feeding rubber member or separation rubber member (step S55: Yes), the control unit 21 estimates the double dispensing due to the reduction in the separation force as a result of wearing of the feeding rubber member or separation rubber member is the cause of the error symptom. The control unit 21 then notifies the management device 4 of the cause, which is a result of the estimation (step S56). The management device 4 notifies the worker terminal 6 and the maintenance company terminal 5 of the recovery procedure, as the replacement of the feeding rubber member or separation rubber member or the like in the separation unit 33, for the cause of the error symptom (step S56A), and ends the processing operation illustrated in **FIG. 13****.** As a result, the person in charge of the worker terminal 6 can replace the feeding rubber member or separation rubber in the separation unit 33, while viewing the recovery procedure, to avoid the error due to a rise in the double dispensing rate in advance.

When the double dispensing is not due to the reduction in the separation force as a result of wearing of a feeding rubber member or separation rubber member (step **S55:** No), the control unit 21 determines whether the double dispensing is due to accumulation of banknotes as a result of wearing of a conveyance roller in the separation unit 33 (step S57). When the double dispensing is due to the accumulation of banknotes as a result of wearing of a conveyance roller (step **S57:** Yes), the control unit 21 estimates the double dispensing due to the accumulation of banknotes as a result of wearing of the conveyance roller is the cause of the error symptom, and notifies the management device 4 of the cause, which is a result of the estimation (step S58). The management device 4 notifies the worker terminal 6 and the maintenance company terminal 5 of the recovery procedure, as the replacement of the conveyance roller in the separation unit 33 or the separation unit 33 as a whole, for the cause of the error symptom (step S58A), and ends the processing operation illustrated in FIG. 13. As a result, the person in charge of the worker terminal 6 can replace the conveyance roller in the separation unit 33 or the separation unit 33 as a whole, while viewing the recovery procedure, to avoid the error due to a rise in the double dispensing rate in advance.

When the double dispensing is not due to the accumulation of banknotes as a result of wearing of a conveyance roller (step S57: No), the control unit 21 continues to estimate other causes of the error symptom due to the double dispensing, and notifies the management device 4 of the cause, which is a result of the estimation. The management device 4 then notifies the worker terminal 6 and the maintenance company terminal 5 of the recovery procedure for the cause. As a result, the person in charge of the worker terminal 6 can execute the recovery work, while viewing the recovery procedure, to avoid the error due to a rise in the double dispensing rate in advance.

If the double dispensing is not due to a defect in the separation unit 33 (step S53: No), the control unit 21 continues to estimate the cause of the error symptom, that is, whether the double dispensing is due to a defect in other units other than the dispenser unit 32 and the separation unit 33. The control unit 21 then notifies the management device 4 of the cause of the error symptom, which is a result of the estimation. For convenience of explanation, for example, the case where double dispensing is a defect in the dispenser unit 32 and the separation unit 33 is illustrated. However, with respect to double dispensing, the causes due to defects in the first conveyance unit 34, the identification unit 35, the holding unit 36, the reject unit 37, the container unit 38, the second conveyance unit 39, and the third conveyance unit 40 are estimated in sequence. The management device 4 then notifies the worker terminal 6 and the maintenance company terminal 5 of the recovery procedure for the cause, which is a result of the estimation. As a result, the person in charge of the worker terminal 6 can execute the recovery work, while viewing the recovery procedure, to avoid the error due to a rise in the double dispensing rate in advance. When the amount of change in the double dispensing rate is less than a predetermined amount (step S54: No), the control unit 21 continues to estimate other causes of the error symptom due to the double dispensing, and notifies the management device 4 of the cause, which is a result of the estimation. The management device 4 then notifies the worker terminal 6 and the maintenance company terminal 5 of the recovery procedure for the cause of the error symptom. As a result, the person in charge of the worker terminal 6 can execute the recovery work, while viewing the recovery procedure, to avoid the error due to a rise in the double dispensing rate in advance.

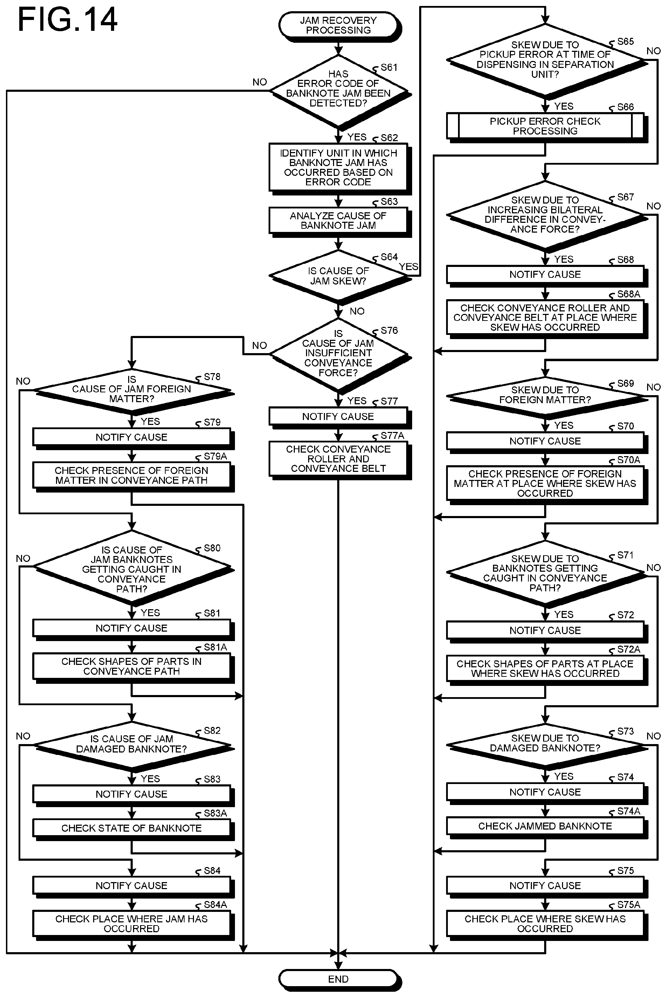

FIG. 14 is a flowchart illustrating an example of a processing operation, related to jam recovery processing, performed by the cause estimation device 3 and the management device 4. The control unit 21 in the cause estimation device 3 determines whether an error code of banknote jam has been detected (step S61). Upon detecting the error code of banknote jam (step S61: Yes), the control unit 21 identifies the unit in which a banknote jam has occurred based on the error code (step S62).

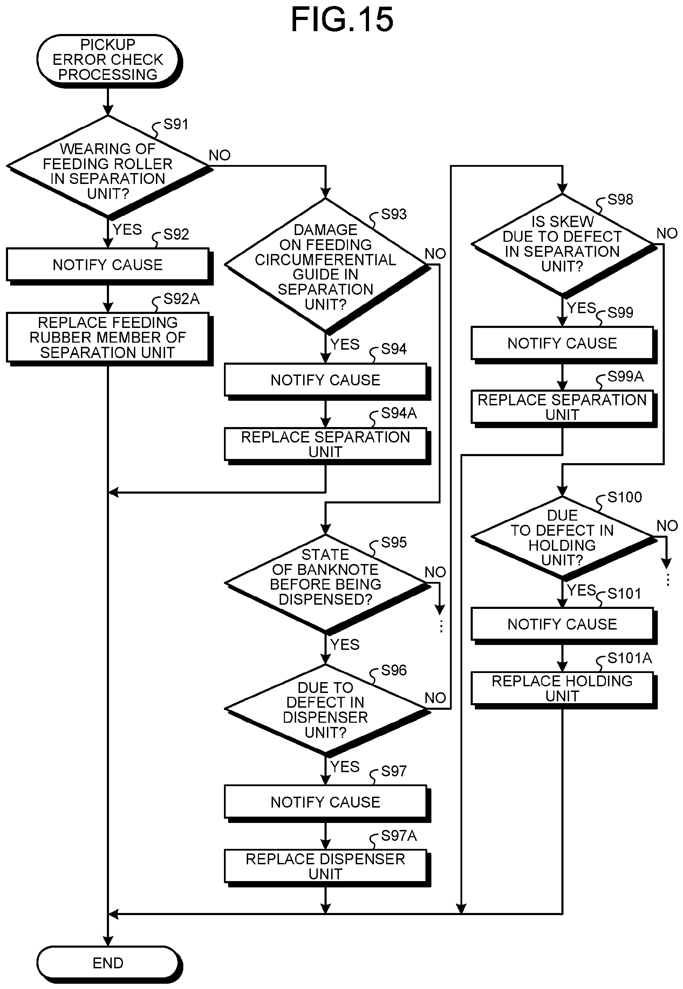

The control unit 21 analyzes the cause of the banknote jam from log information such as the status data (step S63), and determines whether the cause of the jam is skew (step S64). When the cause of the jam is skew (step S64: Yes), the control unit 21 determines whether the cause of the jam is skew due to a pickup error at the time of dispensing in the separation unit 33 (step S65). When the cause of the jam is skew due to a pickup error (step S65: Yes), the control unit 21 executes pickup error check processing illustrated in FIG. 15 (step S66), and ends the processing operation illustrated in FIG. 14.

When the cause of the jam is not skew due to a pickup error (step S65: No), the control unit 21 determines whether the cause of the jam is skew due to an increasing bilateral difference in the conveyance force (step S67). When the cause of the jam is skew due to an increasing bilateral difference in the conveyance force (step S67: Yes), the control unit 21 estimates the jam resulting from the skew due to the increasing bilateral difference in the conveyance force is the cause, and notifies the management device 4 of the cause, which is a result of the estimation (step S68). The management device 4 notifies the worker terminal 6 and the maintenance company terminal 5 of the recovery procedure for checking the conveyance roller and the conveyance belt at the place where the skew has occurred for the cause of the jam (step S68A), and ends the processing operation illustrated in **FIG. 14****.** As a result, the person in charge of the worker terminal 6 can check the conveyance roller and the conveyance belt at the place where the skew has occurred, while viewing the recovery procedure, to perform recovery from the jam due to the increasing bilateral difference in the conveyance force.

When the cause of the jam is not skew due to an increasing bilateral difference in the conveyance force (step S67: No), the control unit 21 determines whether the cause of the jam is skew due to a foreign matter (step S69). When the cause of the jam is skew due to a foreign matter (step S69: Yes), the control unit 21 estimates the jam resulting from the skew due to the foreign matter is the cause, and notifies the management device 4 of the cause, which is a result of the estimation (step S70). The management device 4 notifies the worker terminal 6 and the maintenance company terminal 5 of the recovery procedure for checking the presence of foreign matter at the place where the skew has occurred for the cause of the jam (step S70A), and ends the processing operation illustrated in FIG. 14. As a result, the person in charge of the worker terminal 6 can check the presence of foreign matter at the place where the skew has occurred, while viewing the recovery procedure, to perform recovery from the jam resulting from the skew due to the foreign matter.

When the cause of the jam is not skew due to a foreign matter (step S69: No), the control unit 21 determines whether the cause of the jam is skew due to banknotes getting caught in the conveyance path (step S71). When the cause of the jam is skew due to banknotes getting caught in the conveyance path (step S71: Yes), the control unit 21 estimates the jam resulting from the skew due to the banknotes getting caught in the conveyance path is the cause, and notifies the management device 4 of the cause, which is a result of the estimation (step S72). The management device 4 notifies the worker terminal 6 and the maintenance company terminal 5 of the recovery procedure for checking the shapes of parts at the place where the skew has occurred for the cause of the jam (step S72A), and ends the processing operation illustrated in FIG. 14. As a result, the person in charge of the worker terminal 6 can check the shapes of parts at the place where the skew has occurred, while viewing the recovery procedure, to perform recovery from the jam resulting from the skew due to the banknotes getting caught in the conveyance path.

When the cause of the jam is not skew due to banknotes getting caught in the conveyance path (step S71: No), the control unit 21 determines whether the cause of the jam is skew due to a damaged banknote (step S73). When the cause of the jam is skew due to a damaged banknote (step S73: Yes), the control unit 21 estimates the jam resulting from the skew due to the damaged banknote is the cause, and notifies the management device 4 of the cause, which is a result of the estimation (step S74). The management device 4 notifies the worker terminal 6 and the maintenance company terminal 5 of the recovery procedure for checking the jammed banknote for the cause of the jam (step S74A), and ends the processing operation illustrated in FIG. 14. As a result, the person in charge of the worker terminal 6 can check the jammed banknote, while viewing the recovery procedure, to perform recovery from the jam resulting from the skew due to the damaged banknote.

When the cause of the jam is not skew due to a damaged banknote (step S73: No), the control unit 21 estimates other causes of the jam, and notifies the management device 4 of the cause, which is a result of the estimation (step S75). The management device 4 notifies the worker terminal 6 and the maintenance company terminal 5 of the recovery procedure for checking the place where the skew has occurred for the other causes of the jam (step S75A), and ends the processing operation illustrated in FIG. 14. As a result, the person in charge of the worker terminal 6 can check the place where the skew has occurred, while viewing the recovery procedure, to perform recovery from the jam resulting from the skew. When the control unit 21 detects no error code of banknote jam (step S61: No), the control unit 21 ends the processing operation illustrated in FIG. 14.

When the cause of the jam is not skew (step S64: No), the control unit 21 determines whether the cause of the jam is insufficient conveyance force (step S76). When the cause of the jam is insufficient conveyance force (step S76: Yes), the control unit 21 estimates the jam due to the insufficient conveyance force is the cause, and notifies the management device 4 of the cause, which is a result of the estimation (step S77). The management device 4 notifies the worker terminal 6 and the maintenance company terminal 5 of the recovery procedure for checking the conveyance roller and the conveyance belt for the cause of the jam (step S77A), and ends the processing operation illustrated in FIG. 14. As a result, the person in charge of the worker terminal 6 can check the conveyance roller and the conveyance belt, while viewing the recovery procedure, to perform recovery from the jam due to the insufficient conveyance force.

When the cause of the jam is not insufficient conveyance force (step S76: No), the control unit 21 determines whether the cause of the jam is a foreign matter (step S78). When the cause of the jam is a foreign matter (step S78: Yes), the control unit 21 estimates the jam due to the foreign matter is the cause, and notifies the management device 4 of the cause, which is a result of the estimation (step S79). The management device 4 notifies the worker terminal 6 and the maintenance company terminal 5 of the recovery procedure for checking the foreign matter for the cause of the jam (step S79A), and ends the processing operation illustrated in FIG. 14. As a result, the person in charge of the worker terminal 6 can check the foreign matter, while viewing the recovery procedure, to perform recovery from the jam due to the foreign matter.

When the cause of the jam is not a foreign matter (step S78: No), the control unit 21 determines whether the cause of the jam is banknotes getting caught in the conveyance path (step S80). When the cause of the jam is banknotes getting caught in the conveyance path (step S80: Yes), the control unit 21 estimates the jam due to the banknotes getting caught in the conveyance path is the cause, and notifies the management device 4 of the cause, which is a result of the estimation (step S81). The management device 4 notifies the worker terminal 6 and the maintenance company terminal 5 of the recovery procedure for checking the shapes of parts in the conveyance path for the cause of the jam (step S81A), and ends the processing operation illustrated in FIG. 14. As a result, the person in charge of the worker terminal 6 can check the shapes of parts in the conveyance path, while viewing the recovery procedure, to perform recovery from the jam due to the banknotes getting caught in the conveyance path.

When the cause of the jam is not banknotes getting caught in the conveyance path (step S80: No), the control unit 21 determines whether the cause of the jam is a damaged banknote (step S82). When the cause of the jam is a damaged banknote (step S82: Yes), the control unit 21 estimates the jam due to the damaged banknote is the cause, and notifies the management device 4 of the cause, which is a result of the estimation (step S83). The management device 4 notifies the worker terminal 6 and the maintenance company terminal 5 of the recovery procedure for checking the jammed banknote for the cause of the jam (step S83A), and ends the processing operation illustrated in FIG. 14. As a result, the person in charge of the worker terminal 6 can check the jammed banknote, while viewing the recovery procedure, to perform recovery from the jam due to the damaged banknote.

When the cause of the jam is not a damaged banknote (step S82: No), the control unit 21 estimates other causes of the jam, and notifies the management device 4 of the cause, which is a result of the estimation (step S84). The management device 4 notifies the worker terminal 6 and the maintenance company terminal 5 of the recovery procedure for checking the place where the jam has occurred for the other causes of the jam (step S84A), and ends the processing operation illustrated in FIG. 14. As a result, the person in charge of the worker terminal 6 can check the place where the jam has occurred, while viewing the recovery procedure, to perform recovery from the jam due to the other causes. The case where the cause of the jam is estimated and the recovery procedure for the cause is notified to the worker terminal 6 and the like in the processing illustrated in FIG. 14 is illustrated for convenience of explanation, but the case is not limited to the cause of the jam or the like, and can be modified as appropriate.

FIG. 15 is a flowchart illustrating an example of a processing operation, related to pickup error check processing, performed by the cause estimation device 3 and the management device 4. The control unit 21 in the cause estimation device 3 determines whether the skew causing the jam is due to wearing of a feeding roller in the separation unit 33 (step S91). When the skew causing the jam is due to wearing of a feeding roller (step S91: Yes), the control unit 21 estimates the jam resulting from the skew due to the wearing of the feeding roller is the cause, and notifies the management device 4 of the cause, which is a result of the estimation (step S92). The management device 4 notifies the worker terminal 6 and the maintenance company terminal 5 of the recovery procedure, as the replacement of the feeding rubber member in the separation unit 33, for the cause of the jam (step S92A), and ends the processing operation illustrated in FIG. 15. As a result, the person in charge of the worker terminal 6 can replace the feeding rubber member in the separation unit 33, while viewing the recovery procedure, to perform recovery from the jam resulting from the skew due to the wearing of the feeding roller.

When the skew causing the jam is not due to wearing of a feeding roller (step S91: No), the control unit 21 determines whether the skew causing the jam is due to damage on a feeding circumferential guide in the separation unit 33 (step S93). When the skew causing the jam is due to damage on a feeding circumferential guide (step S93: Yes), the control unit 21 estimates the skew due to damage on the feeding circumferential guide is the cause of the jam, and notifies the management device 4 of the cause, which is a result of the estimation (step S94). The management device 4 notifies the worker terminal 6 and the maintenance company terminal 5 of the recovery procedure, as the replacement of the separation unit 33, for the cause of the jam (step S94A), and ends the processing operation illustrated in FIG. 15. As a result, the person in charge of the worker terminal 6 can replace the separation unit 33, while viewing the recovery procedure, to perform recovery from the jam due to damage on a feeding circumferential guide in the separation unit 33.

When the skew causing the jam is not due to damage on a feeding circumferential guide (step S93: No), the control unit 21 determines whether the skew causing the jam is due to a state of a banknote before being dispensed (step S95). When the skew causing the jam is due to a state of a banknote before being dispensed (step S95: Yes), the control unit 21 determines whether the skew causing the jam is due to a defect in the dispenser unit 32 (step S96). When the skew causing the jam is due to a defect in the dispenser unit 32 (step S96: Yes), the control unit 21 estimates the jam due to the defect in the dispenser unit 32 is the cause, and notifies the management device 4 of the cause, which is a result of the estimation (step S97). The management device 4 notifies the worker terminal 6 and the maintenance company terminal 5 of the recovery procedure, as the replacement of the dispenser unit 32, for the cause of the jam (step S97A), and ends the processing operation illustrated in FIG. 15. As a result, the person in charge of the worker terminal 6 can replace the dispenser unit 32, while viewing the recovery procedure, to perform recovery from the jam resulting from the skew due to the defect in the dispenser unit 32.

When the skew causing the jam is not due to a defect in the dispenser unit 32 (step S96: No), the control unit 21 determines whether the skew causing the jam is due to a defect in the separation unit 33 (step S98). When the skew causing the jam is caused by a defect in the separation unit 33 (step S98: Yes), the control unit 21 estimates the jam resulting from the skew due to the defect in the separation unit 33 is the cause, and notifies the management device 4 of the cause, which is a result of the estimation (step S99). The management device 4 notifies the worker terminal 6 and the maintenance company terminal 5 of the recovery procedure, as the replacement of the separation unit 33, for the cause of the jam (step S99A), and ends the processing operation illustrated in FIG. 15. As a result, the person in charge of the worker terminal 6 can replace the separation unit 33, while viewing the recovery procedure, to perform recovery from the jam resulting from the skew due to the defect in the separation unit 33.

When the skew causing the jam is not caused by a defect in the separation unit 33 (step S98: No), the control unit 21 determines whether the skew causing the jam is due to a defect in the holding unit 36 (step S100). When the skew causing the jam is caused by a defect in the holding unit 36 (step S100: Yes), the control unit 21 estimates the jam resulting from the skew due to the defect in the holding unit 36 is the cause, and notifies the management device 4 of the cause, which is a result of the estimation (step S101). The management device 4 notifies the worker terminal 6 and the maintenance company terminal 5 of the recovery procedure, as the replacement of the holding unit 36, for the cause of the jam (step S101A), and ends the processing operation illustrated in FIG. 15. As a result, the person in charge of the worker terminal 6 can replace the holding unit 36, while viewing the recovery procedure, to perform recovery from the jam resulting from the skew due to the defect in the holding unit 36.

When the skew causing the jam is not caused by a defect in the holding unit 36 (step S100: No), the control unit 21 continues to estimate whether the skew causing the jam is due to a defect in other units, and notifies the management device 4 of the cause of the jam confirmed. The management device 4 then notifies the worker terminal 6 and the maintenance company terminal 5 of the recovery procedure for the cause of the jam. As a result, the person in charge of the worker terminal 6 can perform the recovery work, while viewing the recovery procedure, to perform recovery from the jam.

When the skew causing the jam is not due to a state of a banknote before being dispensed (step S95: No), the control unit 21 continues to estimate whether the skew causing the jam is due to a defect in other units, and notifies the management device 4 of the cause of the jam, which is a result of the estimation. The management device 4 then notifies the worker terminal 6 and the maintenance company terminal 5 of the recovery procedure for the cause of the jam. As a result, the person in charge of the worker terminal 6 can perform the recovery work, while viewing the recovery procedure, to perform recovery from the jam.

### [Effects of Embodiment]

In the cause estimation device 3 according to the present embodiment, status data on each unit in the ATM 2 is collected via a wireless LAN, teaching data is generated based on the status data, and a learning model for estimating a cause related to an error or an error symptom for each unit is generated based on the teaching data generated. As a result, the cause estimation device 3 can collect the status data on the ATM 2 in a remote place and recognize the status of each ATM 2, for example. Moreover, since the cause estimation device 3 collects the status data on each unit in the ATM 2 via a wireless LAN, it is not necessary to lay a cable line for collecting the status data. Furthermore, the cause estimation device 3 can learn the cause, for each unit, of an error or an error symptom from the status data collected from each ATM 2.

Furthermore, upon detecting an error or an error symptom from the status data, the cause estimation device 3 estimates the cause of the error or the error symptom for each unit based on the learning model in the learning unit 21B, and notifies the management device 4 of the cause. As a result, even upon detecting an error or an error symptom from the status data, the cause estimation device 3 can automatically notify the management device 4 of the cause of the error or the error symptom for each unit. Upon receiving the cause from the cause estimation device 3, the management device 4 notifies the worker terminal 6 and the maintenance company terminal 5 of the recovery procedure for the cause. The worker terminal 6 and the maintenance company terminal 5 display the recovery procedure for each cause of the error or the error symptom, for example. As a result, the person in charge of the maintenance company terminal 5 can prepare a replacement part if there is a part ID of the part to be replaced in the recovery procedure for the cause of the error or the error symptom of the ATM 2, while viewing the part ID in the recovery procedure. Furthermore, the worker using the worker terminal 6 can perform recovery from the error of the ATM 2, while viewing the recovery procedure, even if he/she is not skillful. Moreover, the error recovery time can be shortened, and the service deterioration of the ATM 2 due to a prolonged recovery time can be avoided. Moreover, even if an error symptom appears, the recovery procedure will be presented, so that the error can be avoided in advance.

Upon detecting a banknote jam from the status data, the cause estimation device 3 estimates the cause of the banknote jam and notifies the management device 4 of the cause of the banknote jam. Upon receiving the cause of the banknote jam, the management device 4 notifies the worker terminal 6 and the maintenance company terminal 5 of the recovery procedure for the cause of the banknote jam. Upon receiving the recovery procedure from the management device 4, the worker terminal 6 and the maintenance company terminal 5 display the recovery procedure for the banknote jam. As a result, the person in charge of the maintenance company terminal 5 can prepare a replacement part if there is a part ID in the recovery procedure for the banknote jam in the ATM 2, while viewing the part ID in the recovery procedure. Furthermore, the worker using the worker terminal 6 can perform recovery from the banknote jam, while viewing the recovery procedure, even if he/she is not skillful. Moreover, even if an error symptom of a banknote jam appears, the recovery procedure will be presented, so that the banknote jam can be avoided in advance.

Upon detecting skew of a banknote from the status data, the cause estimation device 3 estimates the cause of the skew in the ATM 2 and notifies the management device 4 of the cause of the skew of the banknote. Upon receiving the cause of the skew of the banknote, the management device 4 notifies the worker terminal 6 and the maintenance company terminal 5 of the recovery procedure for the cause of the skew of the banknote. Upon receiving the recovery procedure from the management device 4, the worker terminal 6 and the maintenance company terminal 5 display the recovery procedure for each cause of the skew of the banknote. Even if the skew of the banknote occurs, the person in charge of the maintenance company terminal 5 can prepare a replacement part if there is a part ID in the recovery procedure for the skew of the banknote in the ATM 2, while viewing the part ID in the recovery procedure. Furthermore, the worker using the worker terminal 6 can perform recovery from the skew of the banknote, while viewing the recovery procedure, even if he/she is not skillful. Moreover, even if an error symptom of skew of a banknote appears, the recovery procedure will be presented, so that the skew of the banknote can be avoided in advance.

Upon detecting double dispensing of banknotes from the status data, the cause estimation device 3 estimates the cause of the double dispensing and notifies the management device 4 of the cause of the double dispensing. Upon receiving the cause of the double dispensing, the management device 4 notifies the worker terminal 6 and the maintenance company terminal 5 of the recovery procedure for the cause of the double dispensing. Upon receiving the recovery procedure from the management device 4, the worker terminal 6 and the maintenance company terminal 5 display the recovery procedure for the double dispensing. As a result, the person in charge of the maintenance company terminal 5 can prepare a replacement part if there is a part ID in the recovery procedure for the double dispensing of banknotes in the ATM 2, while viewing the part ID in the recovery procedure. Furthermore, the worker using the worker terminal 6 can perform recovery from the double dispensing of banknotes, while viewing the recovery procedure, even if he/she is not skillful. Moreover, even if an error symptom of double dispensing of banknotes appears, the recovery procedure will be presented, so that the double dispensing of banknotes can be avoided in advance.

The cause estimation device 3 refers to the service life memory 22A that manages the replacement deadline for each unit in the ATM 2 and notifies the management device 4 of the cause including the information identifying the unit the replacement deadline of which has expired as a replacement part. Upon receiving the cause, the management device 4 notifies the worker terminal 6 and the maintenance company terminal 5 of the recovery procedure including the part ID of the part to be replaced. Upon receiving the recovery procedure from the management device 4, the worker terminal 6 and the maintenance company terminal 5 display the recovery procedure for replacement of the part. As a result, the person in charge of the maintenance company terminal 5 can prepare a replacement unit, while viewing the part ID in the recovery procedure. Furthermore, the worker using the worker terminal 6 can replace the unit the replacement deadline of which has expired, while viewing the recovery procedure, even if he/she is not skillful.

In addition, the management device 4 notifies the worker terminal 6 and the maintenance company terminal 5 of the recovery procedure including the part ID of the part to be replaced. As a result, a person in charge in the maintenance company prepares a replacement part for the worker, and the worker brings the replacement part to the location of the ATM 2 with the error and performs the error recovery work. As a result, the error recovery time can be shortened, and the service deterioration of the ATM 2 due to a prolonged recovery time can be avoided.

### [Other Examples]

In the ATM maintenance system 1 according to the present embodiment, the ATM 2 is illustrated as a maintenance target, but for example, such paper sheet handling devices as a cash dispenser (CD), a teller cash recycler (TCR), a money changer, and a voting ticket counting machine may be applicable, and such modification can be made as appropriate. Furthermore, in the present embodiment, banknotes are illustrated as paper sheets but are not limited to banknotes, and may be paper sheets such as voting tickets and stock certificates, for example, and such modification can be made as appropriate.

According to the above-described embodiment, a case is illustrated where the management device 4 manages the recovery procedure for each cause and notifies the worker terminal 6 and the maintenance company terminal 5 of the recovery procedure corresponding to the cause, but this is not limiting. For example, the cause estimation device 3 may manage the recovery procedure for each cause without going through the management device 4, and may notify the worker terminal 6 and the maintenance company terminal 5 of the recovery procedure for the cause, and such modification can be made as appropriate.

In this case, the cause estimation device 3 may estimate and output the cause for each unit corresponding to the error or the error symptom and the recovery procedure for recovery from the error or the error symptom, based on the learning model. The cause estimation device 3 then notifies the worker terminal 6 and the maintenance company terminal 5 of the cause and the recovery procedure. As a result, the worker and the person in charge in the maintenance company can recognize the recovery procedure for the cause of the error or the error symptom of the ATM 2. In particular, regardless of whether the worker is not skillful, he/she can not only perform recovery from an error of the ATM 2, while viewing the recovery procedure on the worker terminal 6, but also avoid an error in advance if an error symptom appears. The error recovery time can be shortened, and the service deterioration of the ATM 2 due to a prolonged recovery time can be avoided.

Furthermore, the cause estimation device 3 may notify the worker terminal 6 and the maintenance company terminal 5 of the recovery procedure including information identifying the replacement part for recovery from the error or the error symptom. In this case, the worker and the person in charge in the maintenance company can recognize the replacement part for recovery from the cause of the error or the error symptom of the ATM 2.

A case is illustrated where the cause estimation device 3 collects the status data on each ATM 2 via the wireless LAN and collects the status data on each ATM 2 via the communication network. However, it is not limited to the communication network, and a terminal of a staff member who patrols each ATM 2 may collect the status data on the ATM 2 and transmit the collected status data to the cause estimation device 3, and such modification can be made as appropriate.

Furthermore, a case is illustrated where the cause estimation device 3 automatically collects the status data in the ATM 2 via the wireless LAN at predetermined intervals, but the status data may be collected continuously or irregularly, and such modification can be made as appropriate.

For example, the first threshold of the error occurrence rate, the second threshold of the skew rate, and the third threshold of the double dispensing rate are each set to 10%, but this is not limiting and modification can be made as appropriate.

Furthermore, a case is illustrated where the learning unit 21B constructs supervised learning, but this is not limiting, and unsupervised learning or semi-supervised learning may be used, and such modification can be made as appropriate.

According to the present embodiment, a case is illustrated where the management device 4 notifies the worker terminal 6, via the maintenance company terminal 5, of a report of an error or an error symptom, but the worker terminal 6 may be notified directly, and such modification can be made as appropriate.

According to the invention, increases in the error occurrence rate and in the skew rate are error symptoms.

For example, the ATM maintenance system 1 can be applied also when storage errors such as a storage number upper limit error in storing banknotes in the container unit 38 are detected. The ATM 2 analyzes the number of banknotes stored, and in a case where it determines that the storage number upper limit is reached even when the number of banknotes stored is much less than the storage number upper limit of banknotes, the banknotes stored may be out of alignment and an upper limit detection sensor may detect this. For example, this occurs when banknotes, which are normally stored one by one in their thickness direction, are out of alignment under the influence of static electricity or the like and some banknotes are stored in the vertical direction. Even in this case, upon detecting a storage error from the status data on the ATM 2, the cause estimation device 3 estimates the cause of the storage error and notifies the management device 4 of the cause, which is a result of the estimation. Upon receiving the cause of the storage error, the management device 4 notifies the worker terminal 6 and the maintenance company terminal 5 of the recovery procedure corresponding to the cause. Upon receiving the recovery procedure from the management device 4, the worker terminal 6 and the maintenance company terminal 5 display the recovery procedure for the storage error. As a result, the person in charge of the maintenance company terminal 5 can prepare a replacement part if there is a part ID of the part to be replaced in the recovery procedure for the storage error, while viewing the part ID in the recovery procedure. Furthermore, the worker using the worker terminal 6 can perform recovery from the storage error, while viewing the recovery procedure, even if he/she is not skillful. Moreover, even if an error symptom of a storage error appears, the recovery procedure will be presented, so that the storage error can be avoided in advance.

Furthermore, when the number of banknotes withdrawn is larger than the number of banknotes stored, there is a high possibility that the loaded banknotes will be insufficient. The cause estimation device 3 estimates the cause of insufficient replenishment of banknotes in the ATM 2 when the number of banknotes stored in the container cassette 38A in the container unit 38 in the ATM 2 becomes equal to or less than a predetermined number from the status data, and notifies the management device 4 of the cause of the insufficient replenishment of banknotes. Upon receiving the cause of the insufficient replenishment of banknotes, the management device 4 notifies the worker terminal 6 and the maintenance company terminal 5 of the recovery procedure for each cause of the insufficient replenishment. Upon receiving the recovery procedure from the management device 4, the worker terminal 6 and the maintenance company terminal 5 display the recovery procedure for the insufficient replenishment of banknotes. As a result, the worker using the worker terminal 6 can replenish banknotes in the container cassette 38A, while viewing the recovery procedure, even if he/she is not skillful. The error recovery time can be shortened, and the service deterioration of the ATM 2 due to a prolonged recovery time can be avoided.

In addition, each component of each unit illustrated does not necessarily have to be physically configured as illustrated. That is, the specific form of the distribution/integration of the parts is not limited to the one illustrated, and all or part of the parts may be functionally or physically distributed/integrated in any desirable unit according to various loads, usage conditions, and the like.

Furthermore, all or any part of various processing functions performed in each device may be executed on a central processing unit (CPU) (or a microcomputer such as a micro processing unit (MPU) and a micro controller unit (MCU)). Furthermore, it is obvious that all or any part of various processing functions may be executed on a program analyzed and executed by a CPU (or a microcomputer such as an MPU or an MCU) or on hardware by wired logic.

### Reference Signs List

1 ATM MAINTENANCE SYSTEM
2 ATM
3 CAUSE ESTIMATION DEVICE
4 MANAGEMENT DEVICE
4B RECOVERY PROCEDURE TABLE
5 MAINTENANCE COMPANY TERMINAL
6 WORKER TERMINAL
21 CONTROL UNIT
21A COLLECTION UNIT
21B LEARNING UNIT
21C ESTIMATION UNIT
22A SERVICE LIFE MEMORY

## Claims

1. A paper sheet handling system (1) comprising: a paper sheet handling device (2) that handles paper sheets; a cause estimation device (3) that estimates and outputs a cause related to an error symptom of the paper sheet handling device (2);
and a management device (4) that manages the paper sheet handling device, wherein
the cause estimation device (3) includes:
a collection unit (21A) that collects status data for each unit in the paper sheet handling device (2),
a learning unit (21B) that generates a learning model for estimating the cause related to the error symptom for each unit, based on the status data, and
an estimation unit (21C) that estimates the cause related to the error symptom for each unit, based on the learning model, and outputs the cause to the management device (4), when detecting the error symptom from the status data, wherein the estimation unit is configured to detect:
that the error symptom is an increase in an error occurrence rate in the case that the error occurrence rate, based on the status data, exceeds a first predetermined threshold; and
that the error symptom is a rise in skew rate of the paper sheets conveyed on a conveyance path in the paper sheet handling device (2) in the case that the error occurrence rate does not exceed the first predetermined threshold and a skew rate exceeds a second predetermined threshold; and wherein the management device (4) includes
a table (4B) that manages a recovery procedure for recovery from the error symptom for each cause, and
is configured to refer to the table and to notify a specific terminal device (6) of the recovery procedure corresponding to the cause, when receiving the cause related to the error symptom from the cause estimation device.

2. The paper sheet handling system (1) according to claim 1, wherein,
when detecting a jam of the paper sheets conveyed on a conveyance path in the paper sheet handling device as the error symptom from the status data, the estimation unit (21C)
is configured to estimate and to output a cause of the jam in the paper sheet handling device.

3. The paper sheet handling system (1) according to claim 1, wherein,
when detecting skew of the paper sheets conveyed on a conveyance path in the paper sheet handling device as the error symptom from the status data, the estimation unit (21C)
is configured to estimate and to output a cause of the skew in the paper sheet handling device.

4. The paper sheet handling system (1) according to claim 1, wherein,
when detecting double dispensing of the paper sheets fed to a conveyance path in the paper sheet handling device as the error symptom from the status data, the estimation unit (21C)
is configured to estimate and to output a cause of the double dispensing in the paper sheet handling device.

5. The paper sheet handling system (1) according to claim 1, wherein,
when detecting a storage error in storing the paper sheets in a container in a container unit in the paper sheet handling device as the error symptom from the status data, the estimation unit (21C)
is configured to estimate and to output a cause of the storage error in the paper sheet handling device.

6. The paper sheet handling system (1) according to claim 1, wherein,
when detecting that a number of paper sheets stored in a container in a container unit in the paper sheet handling device becomes equal to or less than a predetermined number as the error symptom from the status data, the estimation unit (21C)
is configured to estimate and to output a cause of a storage error in the paper sheet handling device.

7. The paper sheet handling system (1) according to claim 1, wherein
the estimation unit (21C)
is configured to estimate and to output the cause for each unit corresponding to the error symptom and a recovery procedure for recovery from the error symptom, based on the learning model.

8. The paper sheet handling system (1) according to claim 7, wherein
the estimation unit (21C)
is configured to estimate and to output the recovery procedure including information identifying a replacement part for recovery from the error symptom.

9. The paper sheet handling system (1) according to claim 7, wherein
the paper sheet handling device (2) includes
service life information for managing a replacement deadline for each unit in the paper sheet handling device, and
the estimation unit (21C)
is configured to refer to the service life information and to estimate and to output the recovery procedure including information identifying the unit the replacement deadline of which has expired as a replacement part.

10. A paper sheet handling method performed by a paper sheet handling system (1) according to claim 1, the method comprising:
collecting status data for each unit in a paper sheet handling device (2) that handles paper sheets;
generating a learning model for estimating a cause related to an error symptom of the paper sheet handling device for each unit in the paper sheet handling device with respect to the error symptom, based on the status data;
estimating and outputting the cause for each unit, based on the learning model, when the error symptom is detected from the status data, wherein the estimating comprises:
that detecting the error symptom is an increase in an error occurrence rate in the case that the error occurrence rate, based on the status data, exceeds a first predetermined threshold, and that
detecting the error symptom is a rise in skew rate of the paper sheets conveyed on a conveyance path in the paper sheet handling device in the case that the error occurrence rate does not exceed the first predetermined threshold and a skew rate exceeds a second predetermined threshold;
managing a recovery procedure for recovery from the error symptom for each cause; and
notifying a specific terminal device (6) of the recovery procedure corresponding to the cause, when receiving the cause related to the error symptom from the cause estimation device.

## Patentansprüche

1. Papierblatt-Handhabungssystem (1), umfassend: eine Vorrichtung (2) zur Handhabung eines Papierblatts, die Papierblätter handhabt; eine Vorrichtung (3) zur Ursachenschätzung, die eine Ursache bezüglich eines Fehlersymptoms der Vorrichtung (2) zur Handhabung eines Papierblatts schätzt und ausgibt; und eine Verwaltungsvorrichtung (4), welche die Vorrichtung zur Handhabung eines Papierblatts verwaltet, wobei
die Vorrichtung (3) zur Ursachenschätzung Folgendes beinhaltet:
eine Sammeleinheit (21A), die Statusdaten für jede Einheit in der Vorrichtung (2) zur Handhabung eines Papierblatts sammelt,
eine Lerneinheit (21B), die ein Lernmodell zum Schätzen der Ursache bezüglich des Fehlersymptoms für jede Einheit auf Grundlage der Statusdaten generiert, und
eine Schätzeinheit (21C), welche die Ursache bezüglich des Fehlersymptoms für jede Einheit auf Grundlage des Lernmodells schätzt und die Ursache an die Verwaltungsvorrichtung (4) ausgibt, wenn das Fehlersymptom aus den Statusdaten erfasst wird, wobei die Schätzeinheit dazu konfiguriert ist, Folgendes zu erfassen:
dass das Fehlersymptom eine Steigerung einer Fehlerereignisrate ist, falls die Fehlerereignisrate auf Grundlage der Statusdaten einen ersten vorbestimmten Schwellenwert überschreitet; und
dass das Fehlersymptom ein Anstieg einer Schräglagenrate der Papierblätter ist, die auf einem Förderweg in der Vorrichtung (2) zur Handhabung eines Papierblatts gefördert werden, falls die Fehlerereignisrate den ersten vorbestimmten Schwellenwert nicht überschreitet und eine Schräglagenrate einen zweiten vorbestimmten Schwellenwert überschreitet; und wobei
die Verwaltungsvorrichtung (4) Folgendes beinhaltet:
eine Tabelle (4B), die eine Wiederherstellungsprozedur zur Wiederherstellung aus dem Fehlersymptom für jede Ursache verwaltet und dazu konfiguriert ist, auf die Tabelle Bezug zu nehmen und ein spezifisches Endgerät (6) über die Wiederherstellungsprozedur, die der Ursache entspricht, zu benachrichtigen, wenn die Ursache bezüglich des Fehlersymptoms von der Vorrichtung zur Ursachenschätzung empfangen wird.

2. Papierblatt-Handhabungssystem (1) nach Anspruch 1, wobei,
wenn ein Stau der Papierblätter, die auf einem Förderweg in der Vorrichtung zur Handhabung eines Papierblatts gefördert werden, als das Fehlersymptom aus den Statusdaten erfasst wird, die Schätzeinheit (21C) dazu konfiguriert ist, eine Ursache des Staus in der Vorrichtung zur Handhabung eines Papierblatts zu schätzen und auszugeben.

3. Papierblatt-Handhabungssystem (1) nach Anspruch 1, wobei,
wenn eine Schräglage der Papierblätter, die auf einem Förderweg in der Vorrichtung zur Handhabung eines Papierblatts gefördert werden, als das Fehlersymptom aus den Statusdaten erfasst wird, die Schätzeinheit (21C) dazu konfiguriert ist, eine Ursache der Schräglage in der Vorrichtung zur Handhabung eines Papierblatts zu schätzen und auszugeben.

4. Papierblatt-Handhabungssystem (1) nach Anspruch 1, wobei,
wenn eine Doppelabgabe der Papierblätter, die einem Förderweg in der Vorrichtung zur Handhabung eines Papierblatts zugeführt werden, als das Fehlersymptom aus den Statusdaten erfasst wird, die Schätzeinheit (21C) dazu konfiguriert ist, eine Ursache der Doppelabgabe in der Vorrichtung zur Handhabung eines Papierblatts zu schätzen und auszugeben.

5. Papierblatt-Handhabungssystem (1) nach Anspruch 1, wobei,
wenn ein Lagerungsfehler beim Lagern der Papierblätter in einem Behälter in einer Behältereinheit in der Vorrichtung zur Handhabung eines Papierblatts als das Fehlersymptom aus den Statusdaten erfasst wird, die Schätzeinheit (21C) dazu konfiguriert ist, eine Ursache des Lagerungsfehlers in der Vorrichtung zur Handhabung eines Papierblatts zu schätzen und auszugeben.

6. Papierblatt-Handhabungssystem (1) nach Anspruch 1, wobei,
wenn als das Fehlersymptom aus den Statusdaten erfasst wird, dass eine Anzahl der Papierblätter, die in einem Behälter in einer Behältereinheit in der Vorrichtung zur Handhabung eines Papierblatts gelagert werden, gleich einer vorbestimmten Anzahl oder geringer als diese wird, die Schätzeinheit (21C) dazu konfiguriert ist, eine Ursache eines Lagerungsfehlers in der Vorrichtung zur Handhabung eines Papierblatts zu schätzen und auszugeben.

7. Papierblatt-Handhabungssystem (1) nach Anspruch 1, wobei
die Schätzeinheit (21C) dazu konfiguriert ist, die Ursache für jede Einheit, die dem Fehlersymptom entspricht, und eine Wiederherstellungsprozedur zur Wiederherstellung aus dem Fehlersymptom auf Grundlage des Lernmodells zu schätzen und auszugeben.

8. Papierblatt-Handhabungssystem (1) nach Anspruch 7, wobei
die Schätzeinheit (21C) dazu konfiguriert ist, die Wiederherstellungsprozedur, einschließlich Informationen, die ein Austauschteil zur Wiederherstellung aus dem Fehlersymptom identifizieren, zu schätzen und auszugeben.

9. Papierblatt-Handhabungssystem (1) nach Anspruch 7, wobei
die Vorrichtung (2) zur Handhabung eines Papierblatts Folgendes beinhaltet:
Nutzungsdauerinformationen zum Verwalten einer Austauschfrist für jede Einheit in der Vorrichtung zur Handhabung eines Papierblatts, und
wobei die Schätzeinheit (21C) dazu konfiguriert ist, sich auf die Nutzungsdauerinformationen zu beziehen und die Wiederherstellungsprozedur, einschließlich Informationen, welche die Einheit, deren Austauschfrist abgelaufen ist, als Austauschteil identifizieren, zu schätzen und auszugeben.

10. Verfahren zum Handhaben eines Papierblatts, das durch ein Papierblatt-Handhabungssystem (1) nach Anspruch 1 durchgeführt wird, wobei das Verfahren Folgendes umfasst:
Sammeln von Statusdaten für jede Einheit in einer Vorrichtung (2) zur Handhabung eines Papierblatts, die Papierblätter handhabt;
Generieren eines Lernmodells zum Schätzen einer Ursache bezüglich eines Fehlersymptoms der Vorrichtung zur Handhabung eines Papierblatts für jede Einheit in der Vorrichtung zur Handhabung eines Papierblatts in Bezug auf das Fehlersymptom auf Grundlage der Statusdaten;
Schätzen und Ausgeben der Ursache für jede Einheit auf Grundlage des Lernmodells, wenn das Fehlersymptom aus den Statusdaten erfasst wird, wobei das Schätzen umfasst:
dass das Erfassen des Fehlersymptoms eine Steigerung einer Fehlerereignisrate ist, falls die Fehlerereignisrate auf Grundlage der Statusdaten einen ersten vorbestimmten Schwellenwert überschreitet, und dass das Erfassen des Fehlersymptoms ein Anstieg einer Schräglagenrate der Papierblätter ist, die auf einem Förderweg in der Vorrichtung zur Handhabung eines Papierblatts gefördert werden, falls die Fehlerereignisrate den ersten vorbestimmten Schwellenwert nicht überschreitet und eine Schräglagenrate einen zweiten vorbestimmten Schwellenwert überschreitet;
Verwalten einer Wiederherstellungsprozedur zur Wiederherstellung aus dem Fehlersymptom für jede Ursache; und
Benachrichtigen eines spezifischen Endgeräts (6) über die Wiederherstellungsprozedur, die der Ursache entspricht, wenn die Ursache bezüglich des Fehlersymptoms von der Vorrichtung zur Ursachenschätzung empfangen wird.

## Revendications

1. Système de manipulation de feuille de papier (1) comprenant :
un dispositif de manipulation de feuille de papier (2) qui manipule des feuilles de papier ; un dispositif d'estimation de cause (3) qui estime et délivre en sortie une cause liée à un symptôme d'erreur du dispositif de manipulation de feuille de papier (2) ; et un dispositif de gestion (4) qui gère le dispositif de manipulation de feuille de papier, dans lequel
le dispositif d'estimation de cause (3) comporte :
une unité de collecte (21A) qui collecte des données d'état pour chaque unité dans le dispositif de manipulation de feuille de papier (2),
une unité d'apprentissage (21B) qui génère un modèle d'apprentissage pour estimer la cause liée au symptôme d'erreur pour chaque unité, sur la base des données d'état, et
une unité d'estimation (21C) qui estime la cause liée au symptôme d'erreur pour chaque unité, sur la base du modèle d'apprentissage, et délivre en sortie la cause au dispositif de gestion (4), lors de la détection du symptôme d'erreur à partir des données d'état, dans lequel l'unité d'estimation est configurée pour détecter :
que le symptôme d'erreur est une augmentation d'un taux d'occurrence d'erreurs dans le cas où le taux d'occurrence d'erreurs, sur la base des données d'état, dépasse un premier seuil prédéterminé ; et
que le symptôme d'erreur est une augmentation d'un taux de déviation des feuilles de papier transportées sur un chemin de transport dans le dispositif de manipulation de feuille de papier (2) dans le cas où le taux d'occurrence d'erreurs ne dépasse pas le premier seuil prédéterminé et qu'un taux de déviation dépasse un second seuil prédéterminé ; et dans lequel le dispositif de gestion (4) comporte
une table (4B) qui gère une procédure de rétablissement pour le rétablissement suite au symptôme d'erreur pour chaque cause, et qui est configurée pour se référer à la table et notifier un dispositif terminal spécifique (6) de la procédure de rétablissement correspondant à la cause, lors de la réception de la cause liée au symptôme d'erreur depuis le dispositif d'estimation de cause.

2. Système de manipulation de feuille de papier (1) selon la revendication 1, dans lequel,
lors de la détection d'un bourrage des feuilles de papier transportées sur un chemin de transport dans le dispositif de manipulation de feuille de papier comme étant le symptôme d'erreur à partir des données d'état, l'unité d'estimation (21C) est configurée pour estimer et délivrer en sortie une cause du bourrage dans le dispositif de manipulation de feuille de papier.

3. Système de manipulation de feuille de papier (1) selon la revendication 1, dans lequel,
lors de la détection d'une déviation des feuilles de papier transportées sur un chemin de transport dans le dispositif de manipulation de feuille de papier comme étant le symptôme d'erreur à partir des données d'état, l'unité d'estimation (21C) est configurée pour estimer et délivrer en sortie une cause de la déviation dans le dispositif de manipulation de feuille de papier.

4. Système de manipulation de feuille de papier (1) selon la revendication 1, dans lequel,
lors de la détection d'une double distribution des feuilles de papier introduites dans un chemin de transport dans le dispositif de manipulation de feuille de papier comme étant le symptôme d'erreur à partir des données d'état, l'unité d'estimation (21C) est configurée pour estimer et délivrer en sortie une cause de la double distribution dans le dispositif de manipulation de feuille de papier.

5. Système de manipulation de feuille de papier (1) selon la revendication 1, dans lequel,
lors de la détection d'une erreur de stockage dans le stockage des feuilles de papier dans un conteneur d'une unité de conteneur dans le dispositif de manipulation de feuille de papier comme étant le symptôme d'erreur à partir des données d'état, l'unité d'estimation (21C) est configurée pour estimer et délivrer en sortie une cause de l'erreur de stockage dans le dispositif de manipulation de feuille de papier.

6. Système de manipulation de feuille de papier (1) selon la revendication 1, dans lequel,
lorsqu'il est détecté qu'un nombre de feuilles de papier stockées dans un conteneur d'une unité de conteneur dans le dispositif de manipulation de feuille de papier devient inférieur ou égal à un nombre prédéterminé comme étant le symptôme d'erreur à partir des données d'état, l'unité d'estimation (21C) est configurée pour estimer et délivrer en sortie une cause d'une erreur de stockage dans le dispositif de manipulation de feuille de papier.

7. Système de manipulation de feuille de papier (1) selon la revendication 1, dans lequel
l'unité d'estimation (21C) est configurée pour estimer et délivrer en sortie la cause pour chaque unité correspondant au symptôme d'erreur et une procédure de rétablissement pour le rétablissement suite au symptôme d'erreur, sur la base du modèle d'apprentissage.

8. Système de manipulation de feuille de papier (1) selon la revendication 7, dans lequel
l'unité d'estimation (21C) est configurée pour estimer et délivrer en sortie la procédure de rétablissement comportant des informations identifiant une pièce de rechange pour le rétablissement suite au symptôme d'erreur.

9. Système de manipulation de feuille de papier (1) selon la revendication 7, dans lequel
le dispositif de manipulation de feuille de papier (2) comporte des informations de durée de vie pour gérer une échéance de remplacement pour chaque unité dans le dispositif de manipulation de feuille de papier, et
l'unité d'estimation (21C) est configurée pour se référer aux informations de durée de vie et estimer et délivrer en sortie la procédure de rétablissement comportant des informations identifiant l'unité dont l'échéance de remplacement a expiré en tant que pièce de rechange.

10. Procédé de manipulation de feuille de papier mis en œuvre par un système de manipulation de feuille de papier (1) selon la revendication 1, le procédé comprenant :
la collecte de données d'état pour chaque unité dans un dispositif de manipulation de feuille de papier (2) qui manipule des feuilles de papier ;
la génération d'un modèle d'apprentissage pour estimer une cause liée à un symptôme d'erreur du dispositif de manipulation de feuille de papier pour chaque unité dans le dispositif de manipulation de feuille de papier par rapport au symptôme d'erreur, sur la base des données d'état ;
l'estimation et la sortie de la cause pour chaque unité, sur la base du modèle d'apprentissage, lorsque le symptôme d'erreur est détecté à partir des données d'état, dans lequel l'estimation comprend :
que la détection du symptôme d'erreur est une augmentation d'un taux d'occurrence d'erreurs dans le cas où le taux d'occurrence d'erreurs, sur la base des données d'état, dépasse un premier seuil prédéterminé, et que la détection du symptôme d'erreur est une augmentation d'un taux de déviation des feuilles de papier transportées sur un chemin de transport dans le dispositif de manipulation de feuille de papier dans le cas où le taux d'occurrence d'erreurs ne dépasse pas le premier seuil prédéterminé et qu'un taux de déviation dépasse un second seuil prédéterminé ;
la gestion d'une procédure de rétablissement pour le rétablissement suite au symptôme d'erreur pour chaque cause ; et
la notification à un dispositif terminal spécifique (6) de la procédure de rétablissement correspondant à la cause, lors de la réception de la cause liée au symptôme d'erreur depuis le dispositif d'estimation de cause.
